# EUROPÄISCHE PATENTSCHRIFT

(11) **EP 4 384 410 B1**
(45) Veröffentlichungstag und Bekanntmachung des Hinweises auf die Patenterteilung: **11.12.2024**
(21) Anmeldenummer: 22797015.9
(22) Anmeldetag: 15.09.2022
(51) Int. Cl.: B60L 53/122, H01F 38/14, B60L 5/00, H02J 50/00, B60L 13/03, B60L 15/00, B65G 54/02, H02J 50/10, H02J 50/80, H02J 50/40, H01F 3/00

(54) **INDUKTIVE ENERGIEÜBERTRAGUNGSEINRICHTUNG FÜR EIN LINEARES TRANSPORTSYSTEM**
INDUCTIVE ENERGY TRANSFER DEVICE FOR A LINEAR TANSPORT SYSTEM
DISPOSITIF DE TRANSFERT D'ÉNERGIE INDUCTIVE POUR UN SYSTÈME DE TRANSPORT LINÉAIRE

(30) Priorität: 17.09.2021 DE 102021124122
(43) Veröffentlichungstag der Anmeldung: 19.06.2024
(73) Patentinhaber: Beckhoff Automation GmbH, 33415 Verl (DE)
(72) Erfinder: ACHTERBERG, Jan, 47249 Duisburg (DE); BRINKER, Andreas, 49082 Osnabrück (DE); VORBOHLE, Thomas, 33397 Rietberg (DE)
(74) Vertreter: Patentanwaltskanzlei WILHELM & BECK
(86) Internationale Anmeldenummer: PCT/EP2022/075673
(87) Internationale Veröffentlichungsnummer: WO 2023/041663

(56) Entgegenhaltungen:
- WO-A1-01/02211
- WO-A1-2015/128498
- WO-A1-2017/108114
- WO-A1-92/17929
- DE-A1- 10 334 737
- DE-A1- 102011 115 092
- DE-A1- 102018 111 715
- GB-A- 2 521 676

## Beschreibung

Die Erfindung betrifft eine induktive Energieübertragungseinrichtung für ein lineares Transportsystem, einen magnetisch angetriebenen Schlitten mit einer solchen induktiven Energieübertragungseinrichtung sowie ein lineares Transportsystem.

Bei linearen Transportsystemen bilden Schlitten und Schienenführung einen Linearmotor. Die Schienenführung ist dabei in der Regel der Stator des Linearmotors und weist Antriebsspulen auf. Die Schlitten stellen die Läufer des Linearmotors dar und sind mit Magneten versehen. Durch Bestromung der Antriebspulen in der Schienenführung wird Kraft auf die Magnete der Schlitten ausgeübt, so dass sich die Schlitten entlang der Schienenführung bewegen.

Die Schlitten können Werkzeuge und eine Schlittensteuerung zum Datenaustausch mit einer Steuerung der Schienenführung aufweisen. Um solche elektrischen Verbraucher, im Weiteren auch als Last bezeichnet, auf dem Schlitten kabellos betreiben zu können, ist eine Energieübertragung von der Schlittenführung zum Schlitten notwendig.

Aus der DE 10 2018 111 715 A1 ist ein lineares Transportsystem mit einer induktiven Energieübertragungseinrichtung zwischen einer Schlittenführung und auf der Schlittenführung verfahrbaren Schlitten bekannt. Die induktive Energieübertragungseinrichtung weist eine Energiesendespule mit einer Primärwicklung zum Anlegen einer Eingangsspannung auf, wobei die Primärwicklung sich entlang der Schlittenführung erstreckt. An den Schlitten ist jeweils eine Energieempfangsspule der induktiven Energieübertragungseinrichtung angeordnet, die eine Sekundärwicklung zum Abgreifen einer Ausgangsspannung umfasst. Die Energiesendespule und die Energieempfangsspule liegen sich mindestens teilweise gegenüber, wenn der Schlitten sich entlang der Schlittenführung bewegt, um Energie von der Energiesendespule auf die Energieempfangsspule zu übertragen, die dann einem elektrischen Verbraucher auf dem Schlitten zur Verfügung gestellt wird. Im linearen Transportsystem der DE 10 2018 111 715 A1 ist neben der induktiven Energieübertragung auch eine kontaktlose Datenübertragung zwischen der Schlittenführung und den Schlitten mit Hilfe von Antennen, die an der Schlittenführung beziehungsweise den Schlitten angeordnet sind, vorgesehen. DE 103 34 737 A1 offenbart in ähnlicher Weise eine induktive Energieübertragungseinrichtung für ein lineares Transportsystem, bei dem wenigstens ein magnetisch angetriebener Schlitten sich entlang einer eine Motormoduleinrichtung aufweisenden Schlittenführung bewegt, wobei die induktive Energieübertragungseinrichtung eine Energiesendespule, die eine Primärwicklung zum Anlegen einer Eingangsspannung aufweist, und eine Energieempfangsspule, die eine Sekundärwicklung zum Abgreifen einer Ausgangsspannung aufweist, umfasst.

In der US 10,483,895 B2 ist eine weitere induktive Energieübertragungseinrichtung für ein lineares Transportsystem beschrieben, bei dem eine Primärwicklung einer Energiesendespule entlang einer Schienenführung angeordnet ist und jeder Schlitten eine Sekundärwicklung als Energieempfangsspule aufweist. Die Primärwicklung der Energiesendespule und die Sekundärwicklung der Energieempfangsspule sind jeweils eben ausgeführt und so angeordnet, dass, wenn der Schlitten entlang der Schienenführung bewegt wird, die Sekundärwicklung mit der Primärwicklung im Wesentlichen gefluchtet ist, wobei ein Luftspalt verbleibt. Die von der Primärwicklung auf die Sekundärwicklung übertragene Energie wird dann einem auf dem Schlitten abgeordneten elektrischen Verbraucher zur Verfügung gestellt.

Aufgabe ist es, eine induktive Energieübertragungseinrichtung für ein lineares Transportsystem bereitzustellen, bei der die von der Schlittenführung auf die Schlitten übertragene Energie schnell und bedarfsgerecht angepasst werden kann.

Die Aufgabe wird mit den unabhängigen Patentansprüchen gelöst. Vorteilhafte Ausgestaltungen sind den abhängigen Patentansprüchen angegeben.

In einem linearen Transportsystem, bei dem wenigstens ein magnetisch angetriebener Schlitten sich entlang einer eine Motormoduleinrichtung aufweisenden Schlittenführung bewegt, ist eine induktive Energieübertragungseinrichtung vorgesehen, die eine Energiesendespule, die eine Primärwicklung zum Anlegen einer Eingangsspannung aufweist, und eine Energieempfangsspule, die eine Sekundärwicklung zum Abgreifen einer Ausgangsspannung aufweist, umfasst. Die Energiesendespule ist dabei an der Motormoduleinrichtung angeordnet und erstreckt sich entlang der Schlittenführung. Die Energieempfangsspule ist am Schlitten angeordnet ist und erstreckt sich entlang des Schlittens. Die Energiesendespule und die Energieempfangsspule liegen sich mindestens teilweise gegenüber, wenn der Schlitten sich entlang der Schlittenführung bewegt, um Energie von der Energiesendespule auf die Energieempfangsspule zu übertragen. Die Sekundärwicklung der Energieempfangsspule weist einen Steuerspannung-Wicklungsabschnitt und einen Lastspannung-Wicklungsabschnitt auf, wobei der Steuerspannung-Wicklungsabschnitt und der Lastspannung-Wicklungsabschnitt voneinander getrennte Wicklungsleiterbahnen umfassen. Der Steuerspannung-Wicklungsabschnitt stellt dabei eine Steuerspannung zum Abgriff durch eine Schlittenführung-Steuereinheit auf dem Schlitten und der Lastspannung-Wicklungsabschnitt eine Lastspannung zum Abgriff durch eine Last auf dem Schlitten bereit.

Die Aufteilung der Sekundärwicklung der Energieempfangsspule in einen Steuerspannung-Wicklungsabschnitt und einen Lastspannung-Wicklungsabschnitt ermöglicht es, unterschiedliche elektrische Verbraucher auf dem Schlitten getrennt und bedarfsgerecht mit Energie zu versorgen und dabei insbesondere sicherzustellen, dass die Energieversorgung der Schlittensteuerung immer aktiv und unbeeinflusst vom Lastspanungskreis zur Versorgung von Schlitten-Werkzeugen bleibt. So kann der Steuerspannung-Wicklungsabschnitt beispielsweise im Leerlauf eine 24-V-Steuerspannung und der Lastspannung-Wicklungsabschnitt im Leerlauf eine 48-V-Lastspannung liefern. Die getrennten Wicklungen machen es auch möglich, für die Lastspannung den Leiterbahnquerschnitt und die Windungszahl so anzupassen, dass beispielsweise für bestimmte Anwendungen eine deutlich höhere Lastspannung erzeugt wird, wobei die Steuerspannung gleichzeitig unverändert bleibt. Die Lastspannung kann ferner getrennt von der Steuerspannung sehr schnell verändert und auch eigenständig abgeschaltet werden.

Der Querschnitt einer den Steuerspannung-Wicklungsabschnitt bildenden Wicklungsleiterbahn kann kleiner als der Querschnitt einer den Lastspannung-Wicklungsabschnitt bildenden Wicklungsleiterbahn ausgeführt sein.

Durch die Aufteilung der Sekundärwicklung der Energieempfangsspule in zwei Wicklungen und die Querschnittsauslegung kann der Steuerspannung-Wicklungsabschnitt eine Steuerspannung mit wenig Leistung und der Lastspannung-Wicklungsabschnitt eine Lastspannung mit hoher Leistung für eine Sensorik und/oder eine Aktorik auf dem Schlitten bereitstellen.

Die Windungszahl des Steuerspannung-Wicklungsabschnitts kann niedriger als die Windungszahl des Lastspannung-Wicklungsabschnitts sein.

Durch die höhere Windungszahl des Lastspannung-Wicklungsabschnitts kann über einen größeren Nutzlastbereich eine stabile Spannung erzielt werden.

Die Energiesendespule und die Energieempfangsspule können jeweils einen Spulenkörper aufweisen. Der Energiesendespule-Spulenkörper der Energiesendespule und der Energieempfangsspule-Spulenkörper der Energieempfangsspule sind parallel zueinander ausgerichtet und liegen sich zumindest teilweise gegenüber, wenn der Schlitten sich entlang der Schlittenführung bewegt. Die von der Primärwicklung der Energiesendespule aufgespannte Fläche ist parallel zum Energiesendespule-Spulenkörper der Energiesendespule ausgerichtet. Die von dem Steuerspannung-Wicklungsabschnitt und dem Lastspannung-Wicklungsabschnitt der Sekundärwicklung der Energieempfangsspule aufgespannten Flächen sind senkrecht zum Energieempfangsspule-Spulenkörper der Energieempfangsspule ausgerichtet.

Diese Auslegung sorgt einen kompakten Aufbau der induktive Energieübertragungseinrichtung mit einer flachen Energiesendespule. Die Ausführung des Steuerspannung-Wicklungsabschnitts und des Lastspannung-Wicklungsabschnitts senkrecht zum Spulenkörper der Energieempfangsspule ermöglicht eine verbesserte Nutzung des Wickelraums.

Der Energiesendespule-Spulenkörper der Energiesendespule und der Energieempfangsspule-Spulenkörper der Energieempfangsspule können im Querschnitt jeweils E-förmig mit zwei Außenarmrippen und einer Zentralrippe auf einer Spulenkörperfläche ausgebildet sein, wobei die E-förmigen Querschnitte einander zugewandt sind und die Außenarmrippen und die Zentralrippen der Spulenkörperflächen sich gegenüberliegen, wenn der Schlitten sich entlang der Schlittenführung bewegt. Die Primärwicklung der Energiesendespule ist zwischen dem ersten Energiesendespule-Außenarmrippe und dem zweiten Energiesendespule-Außenarmrippe der Energiesendespule-Spulenkörper um die Energiesendespule-Zentralrippen herum angeordnet. Der Steuerspannung-Wicklungsabschnitt und der Lastspannung-Wicklungsabschnitt der Sekundärwicklung der Energieempfangsspule sind zwischen dem ersten Energieempfangsspule-Außenarmrippe und dem zweiten Energieempfangspule-Außenarmrippe der Energieempfangsspule-Spulenkörper um die Energieempfangsspule-Spulenkörperfläche herum angeordnet.

Im Vergleich zur Primärwicklung der Energiesendespule, die um die Zentralrippe des Spulenkörpers ausgeführt ist, ergibt sich der doppelte Wicklungsraum für den Steuerspannung-Wicklungsabschnitt und den Lastspannung-Wicklungsabschnitt der Sekundärwicklung der Energieempfangsspule, die jeweils um eine Außenarmrippe des Spulenkörpers ausgeführt sind. Die magnetische Durchflutung bleibt dabei gleich, weil der magnetische Fluss durch eine Zentralrippe eines Spulenkörpers höher ist als durch eine Außenarmrippe eines Spulenkörpers. Durch den größeren Wicklungsraum kann bei gleichem Querschnitt die Windungszahl der Wicklungen erhöht werden.

Der Energieempfangsspule-Spulenkörper der Energieempfangsspule kann einen ersten Energieempfangsspule-Spulenkörper-Abschnitt und einen zweiten Energieempfangsspule-Spulenkörper-Abschnitt aufweisen, wobei der Lastspannung-Wicklungsabschnitt im ersten Energieempfangsspule-Spulenkörper-Abschnitt und der Steuerspannung-Wicklungsabschnitt im zweiten Energieempfangsspule-Spulenkörper-Abschnitt ausgeführt ist.

Die Aufteilung des Spulenkörpers der Energieempfangsspule, bei der der Steuerspannung-Wicklungsabschnitt und der Lastspannung-Wicklungsabschnitt in getrennten Spulenkörper-Abschnitten ausgeführt sind, ermöglicht einen vereinfachten Spulenaufbau und eine leichtere Montage.

Der Steuerspannung-Wicklungsabschnitt und der Lastspannung-Wicklungsabschnitt der Energieempfangsspule können auch verschachtelt ausgeführt sein.

Die verschachtelte Aufteilung des Steuerspannung-Wicklungsabschnitts und des Lastspannung-Wicklungsabschnitts der Energieempfangsspule am Spulenkörper sorgt dafür, dass der magnetische Fluss im Spulenkörper immer symmetrisch bleibt. Belastungsunterschiede der Wicklungen führen dann nicht zu Asymmetrien und dynamischen Veränderungen im magnetischen Fluss durch den Spulenkörper.

Die Energieempfangsspule kann eine erste Energieempfangsspule-Leiterplatte, die erste Wicklungsleiterbahnen aufweist, eine zweite Energieempfangsspule-Leiterplatte, die zweite Wicklungsleiterbahnen aufweist, und einen Energieempfangsspule-Spulenkörper, der zwischen der ersten Energieempfangsspule-Leiterplatte und der zweiten Energieempfangsspule-Leiterplatte angeordnet ist, umfassen. Die ersten Wicklungsleiterbahnen der ersten Energieempfangsspule-Leiterplatte und die zweiten Wicklungsleiterbahnen der zweiten Energieempfangsspule-Leiterplatte sind dann über elektrische Steckverbindungen miteinander verbunden, um den Steuerspannung-Wicklungsabschnitt und den Lastspannung-Wicklungsabschnitt der Sekundärwicklung der Energieempfangsspule auszubilden.

Die Leiterplatten-Ausführung der Energieempfangsspule, bei der die Wicklungsleiterbahnen auf zwei getrennten Leiterplatten ausgeführt sind, die über elektrische Steckverbindungen miteinander verbunden sind, vereinfacht die getrennte Ausbildung von Steuerspannung-Wicklungsabschnitt und Lastspannung-Wicklungsabschnitt der Sekundärwicklung der Energieempfangsspule.

Auf der dem Energiesendespule-Spulenkörper der Energiesendespule abgewandten Seite des Energieempfangssple-Spulenkörpers der Energieempfangsspule kann eine Kühlungseinrichtung für den Steuerspannung-Wicklungsabschnitt und den Lastspannung-Wicklungsabschnitt der Sekundärwicklung der Energieempfangsspule vorgesehen sein.

Bei der Wicklungsanordnung der Energieempfangsspule liegt eine Wicklungsseite außerhalb des durch die Energiesendespule und die Energieempfangsspule gebildeten Spannungstransformators der Energieübertragungseinrichtung und eignet sich so zum Anbringen eines Kühlkörpers. Der Kühlkörper kann dabei aus dem Schlittengehäuse herausragen, so dass bespielweise Kühlrippen des Kühlkörpers außerhalb des Schlittengehäuses liegen, um vom Fahrtwind des Schlittens gekühlt zu werden.

Bei einem magnetisch angetriebenen Schlitten für ein linearen Transportsystem, bei dem der Schlitten sich entlang einer eine Motormoduleinrichtung aufweisenden Schlittenführung bewegt, kann der Steuerspannung-Wicklungsabschnitt der Sekundärwicklung der Energieempfangsspule über einen ersten Gleichrichter mit einer Schlitten-Steuereinheit und der Lastspannung-Wicklungsabschnitt der Sekundärwicklung der Energieempfangsspule über einen zweiten Gleichrichter mit einer Last verbunden sein.

Mit dieser Auslegung können ein getrennter Steuerspannungs- und Lastspannungskreis auf dem magnetisch angetriebenen Schlitten ausgebildet werden.

Zwischen dem Lastspannung-Wicklungsabschnitt der Sekundärwicklung der Energieempfangsspule und der Last kann ein Lastspannungskreis-Schalter vorgesehen sein, der mit der Schlitten-Steuereinheit verbunden ist, wobei die Schlitten-Steuereinheit den Lastspannungskreis-Schalter öffnen kann, um die Last von dem Lastspannung-Wicklungsabschnitt abzutrennen.

Durch die getrennten Wicklungen der Energieempfangsspule lassen sich eine Steuerspannung und eine Lastspannung für den Schlitten als zwei unabhängige Spannungen erzeugen. Eine Steuerung auf dem Schlitten, die von der Steuerspannung versorgt wird, kann mit Hilfe des Schalters dann die Lastspannung überwachen und beeinflussen. Beispielsweise ist es möglich, bei Lastschwankungen den Lastspannungsschaltkreis von der Last abzutrennen, um so zu verhindern, dass bei einem plötzlichen Abfall der Belastung auf dem Lastspannungsschaltkreis eine Überspannung auftritt, die dann zu einer Beschädigung der Elektronik im Lastspannungsschaltkreis führen kann. Auch kann durch die Abschaltung des Lastspannungsschaltkreises, falls erforderlich, Energie eingespart werden. Die Lastspannungsschaltkreissteuerung kann lokal auf dem Schlitten sehr viel schneller erfolgen im Vergleich zu einer Vorgehensweise, bei der erst ein aktueller Spannungswert mit Hilfe einer Datenübertragung zur Schienenführung übertragen wird, um dann die Energieübertragung der Energiesendespule durch eine Änderung der Frequenz und/oder Amplitude anzupassen.

An den Steuerspannung-Wicklungsabschnitt kann ein erster Energiespeicher und an den Lastspannung-Wicklungsabschnitt ein zweiter Energiespeicher angeschlossen sein, wobei der erste Energiespeicher und der zweite Energiespeicher ausgelegt sind, zwischengespeicherte elektrische Energie an die Schlittensteuerung und/oder die Last abzugeben.

Durch den Abgriff zwei getrennter Spannungen auf dem Schlitten lässt sich eine verbesserte Energiespeicherung erreichen. Es kann dann bedarfsgerecht durch die Auswahl des ersten Energiespeichers beziehungsweise des zweiten Energiespeichers entschieden werden, ob in einer Anwendung die Steuerspannung gepuffert werden soll, um die Steuerung auch in Bereichen ohne Energieübertragung länger aktiv halten zu können, oder ob an Stellen mit hohem Leistungsbedarf der angeschlossenen Sensorik beziehungsweise Aktorik dem Lastspannungsschaltkreis kurzfristig mehr Leistung zur Verfügung gestellt werden soll. Durch die zwei getrennten Spannungen lässt sich auch eine größere Reserve beispielsweise für die Steuerspannung zur Versorgung der Steuerung auf dem Schlitten erzielen.

Ferner kann ein lineares Transportsystem mit wenigstens einem magnetisch angetriebenen Schlitten und einer eine Motormoduleinrichtung aufweisenden Schlittenführung ausgebildet werden, wobei der wenigstens eine magnetisch angetriebene Schlitten sich entlang der Schlittenführung bewegt. Die Motormoduleinrichtung umfasst eine Mehrzahl von Energiesendespulen und ist eingerichtet ist, um auf der Grundlage einer Steuerinformation wenigstens eine Energiesendespule auszuwählen und einen Energieübertrag von der Energiesendespule auf die Energieempfangsspule am Schlitten einzustellen.

Es besteht so die Möglichkeit, einen gezielten und optimal angepassten Energieübertrag von der Motormoduleinrichtung auf den magnetisch angetriebenen Schlitten vorzunehmen.

Die Erfindung wird nachfolgend anhand von Ausführungsformen und unter Bezugnahme auf Figuren näher erläutert. Dabei zeigen in jeweils schematischer Darstellung
- Fig. 1: einen Kurvenausschnitt eines linearen Transportsystems;
- Fig. 2: das Motormodul mit dem geführten Schlitten aus dem linearen Transportsystem der Fig. 1;
- Fig. 3: eine Schnittansicht durch das Motormodul mit geführten Schlitten aus Fig. 2;
- Fig. 4: eine erste Ausführungsform einer induktiven Energieübertragungseinrichtung;
- Fig. 5: eine zweite Ausführungsform einer induktiven Energieübertragungseinrichtung;
- Fig. 6: die in Fig. 4 gezeigte erste Ausführungsform mit Leiterplatten-Ausbau;
- Fig. 7: ein elektrisches Schaltbild einer Primärseite einer induktiven Energieübertragungseinrichtung;
- Fig. 8: ein elektrisches Schaltbild einer Sekundärseite einer induktiven Energieübertragungseinrichtung; und
- Fig. 9: ein elektrisches Schaltbild einer Sekundärseite einer induktiven Energieübertragungseinrichtung mit Energiespeicher.

In den Figuren werden für gleiche Merkmale gleiche Bezugszeichen verwendet. Weiterhin ist aus Gründen der Übersichtlichkeit vorgesehen, dass nicht in jeder Figur immer alle Elemente gezeigt sind und dass auch nicht in jeder Zeichnung jedes Element mit einem eigenen Bezugszeichen versehen ist.

Bei einem linearen Transportsystem werden magnetisch angetriebene Schlitten entlang einer Motormodule aufweisenden Schlittenführung bewegt. Die Motormodule und die Schlitten bilden dabei einen Linearmotor, wobei die Motormodule elektromagnetische Spulen, im Weiteren auch als Antriebsspulen bezeichnet, aufweisen und die Schlitten jeweils Magnete beispielsweise in Form von Magnetplatten tragen, die zusammen mit den Antriebsspulen der Motormodule eine geregelte Vortriebskraft erzeugen. Die Motormodule sind ferner mit einer Leistungselektronik und einer Positionserfassung für die Schlitten versehen.

Die Schlittenführung weist an oder neben den Motormodulen angeordnete Führungsschienenelemente für die Schlitten auf, die den Fahrweg der Schlitten festlegen. Zur Bewegung auf der Führungsschiene besitzen die Schlitten jeweils eine Führungsmechanik. Die Schlittenführung kann beliebig ausgeformt sein und insbesondere einen geschlossenen Schlittenfahrweg bilden. Die gewünschten Geometrien, Längen und Radien werden durch die Anzahl und/oder die Auswahl der Motormodule und der dazugehörigen Führungsschienenelemente festgelegt.

Die Schlitten können auf dem gesamten, von der Schlittenführung vorgegebenen Fahrweg frei bewegt werden, d. h. der Schlitten kann bremsen, beschleunigen, positionieren sowie eine konstante Kraft im Stillstand und in der Bewegung ausüben. Dabei kann die Schlittenbewegung auch mit anderen Bewegungsvorgängen synchronisiert sein. Bei einem geschlossenen Schlittenfahrweg können die Schlitten endlos verfahren werden.

Die Schlitten können unabhängig voneinander bewegt werden. So können die Schlitten vorgegebene Positionen entlang des gesamten Fahrweges anfahren oder auch relativ zueinander verfahren werden. Die Schlitten können sich automatisch aufstauen, um einen bewegten Puffer zu bilden, aus dem heraus ein bewegtes Ziel mit hoher Dynamik angefahren werden kann. In der laufenden Bewegung können Gruppen von Schlitten gebildet werden, die gemeinsam stoppen oder mit einem vorgegebenen Geschwindigkeitsprofil Bearbeitungsstationen anfahren.

Für die Schlittenanzahl auf der Schlittenführung gibt es grundsätzlich keine Beschränkungen. Die Schlittenanzahl wird durch die Länge der Schlittenführung bestimmt und kann passend für die gewünschte Anwendung optimiert werden. Für Positionserfassungen durch die Motormodule weisen die Schlitten jeweils einen Positionsgeber auf, der ein Schlittenpositionssignal an die Motormodule übermittelt.

Das lineare Transportsystem kann als Doppelluftspalt-Linearmotor ausgebildet sein. Die Magnete am Schlitten umgreifen dann die Antriebsspulen der Motormodule auf zwei gegenüberliegenden Seiten. Der Schlitten nimmt so die Anzugskräfte der Magnete auf beiden Seiten der Motormodule auf und kompensiert die Anzugskräfte weitgehend gegenüber der Führungsmechanik am Schlitten. Die Führungsmechanik der Schlitten kann dann verschleißarm auf der Führungsschiene der Schlittenführung laufen.

Das lineare Transportsystem ist vielseitig einsetzbar und ermöglicht einen sehr schnellen Materialtransport. So können durch eine entsprechende Steuerung der Schlitten Produkte verschoben, ein Produktabstand angepasst und/oder eine Produktgeschwindigkeit verringert oder vergrößert werden. Produkte können außerdem geklemmt, bewegt, transportiert und ausgeschleust werden.

Zusätzlich besteht bei linearen Transportsystemen oft auch die Aufgabe, ein Produkt zu manipulieren, d. h. anzuheben, zu verschließen, zu drehen, einen Verschluss zuzuschrauben etc. Dies kann mit Bearbeitungsstationen an der Schlittenführung, aber auch durch Werkzeuge auf den Schlitten erfolgen. Das Schlittenwerkzeug kann beispielsweise ein Greifer, ein Schieber, ein Bohrer oder eine Ausrichtevorrichtung sein.

Auf dem Schlitten kann neben einem Werkzeug zur Produktmanipulation aber auch ein anders gearteter elektrischer Verbraucher, beispielsweise ein Messwerkzeug zur Messung einer physikalischen Größe wie Temperatur, Druck, Strom, Spannung, Beschleunigung, Masse etc. vorgesehen sein.

Ferner kann auf dem Schlitten eine Schlittensteuerung vorgesehen sein. Die Schlittensteuerung kann dazu dienen, einen Datenaustausch mit der Steuerung der die Motormodule beinhaltenden Schienenführung auszuführen. Das Ziel eines solchen Datenaustausches kann es sein, Statusinformationen, zum Beispiel Messsignale zu übertragen, die dann im Rahmen der Steuerung der Schlittenbewegung berücksichtigt werden können. Das Ziel eines solchen Datenaustausches kann es aber auch sein, Steuerinformationen für ein Schlittenwerkzeug von der Schienenführung zum Schlitten zu übertragen. Die Schlittensteuerung kann ferner auch dazu dienen, das auf dem Schlitten vorgesehene Werkzeug autonom zu steuern.

Um das Schlittenwerkzeug beziehungsweise die Schlittensteuerung betreiben zu können, ist eine Energieversorgung für den Schlitten erforderlich. Eine kabellose Auslegung wird dabei durch eine induktive Energieübertragung auf die Schlitten erreicht. Eine Einrichtung für eine solche induktive Energieübertragung umfasst wenigstens eine Energiesendespule, die eine sich entlang der Schlittenführung erstreckende Primärwicklung aufweist. Jeder Schlitten besitzt weiter wenigstens eine Energieempfangsspule, deren Sekundärwicklung sich entlang des Schlittens erstreckt. Die Energiesendespule an der Schlittenführung und die Energieempfangsspule am Schlitten sind so angeordnet, dass, wenn die Energieempfangsspule des Schlittens sich im Bereich der Energiesendespule der Schlittenführung befindet, sich die Energieempfangsspule und die Energiesendespule zumindest teilweise überdecken. Die Energiesendespule bildet dann mit der Energieempfangsspule einen Spannungstransformator.

Die Steuerung der Schlittenführung erkennt eine entsprechende Bewegungsstellung des Schlittens an der Schlittenführung mit Hilfe des Positioniererfassungssystems und veranlasst, dass an die Energiesendespule eine Eingangsspannung angelegt wird. Die Energieempfangsspule greift dann eine Ausgangsspannung ab, die den elektrischen Verbrauchern auf dem Schlitten zur Verfügung gestellt wird.

Um eine schnelle und bedarfsgerechte Energieversorgung bereitzustellen, weist die Sekundärwicklung der Energiesendespule zwei Wicklungsabschnitte, einen Steuerspannung-Wicklungsabschnitt und einen Lastspannung-Wicklungsabschnitt auf, die voneinander getrennte Wicklungsleiterbahnen besitzen. Die Energieempfangsspule stellt dann als Ausgangsspannung zwei getrennte Spannungen bereit, eine Steuerspannung zum Abgriff durch die Schlittensteuerung und eine Lastspannung zum Abgriff durch die Last auf dem Schlitten.

Die Schlittensteuerung kann so autark und damit unbeeinflusst von den weiteren elektrischen Verbrauchern auf dem Schlitten mit Energie versorgt werden. Auch können die Spannungen für die Schlittensteuerung und die Last unabhängig voneinander eingestellt werden. Über die Windungszahlen der jeweiligen Wicklungsleiterbahnen können die Steuerspannung beziehungsweise die Lastspannung festgelegt werden. So kann der Lastspannung-Wicklungsabschnitt mit einem geringeren Leitungsquerschnitt und einer höheren Windungszahl ausgelegt sein, um gegenüber der Steuerspannung des Steuerspannung-Wicklungsabschnitts eine höhere Lastspannung bereitzustellen. Beispielsweise kann der Steuerspannung-Wicklungsabschnitt eine Leerlaufspannung von 24 V Steuerspannung liefern, wohingegen der Lastspannung-Wicklungsabschnitt im Leerlauf eine Lastspannung von 48 V bereitstellt.

Im Folgenden werden Ausgestaltungen der induktiven Energieübertragungseinrichtung für ein lineares Transportsystem, bei der die Sekundärwicklung der Energiesendespule zwei voneinander getrennte Wicklungsleiterbahnen für einen Steuerspannung-Wicklungsabschnitt und einen Lastspannung-Wicklungsabschnitt aufweist, erläutert.

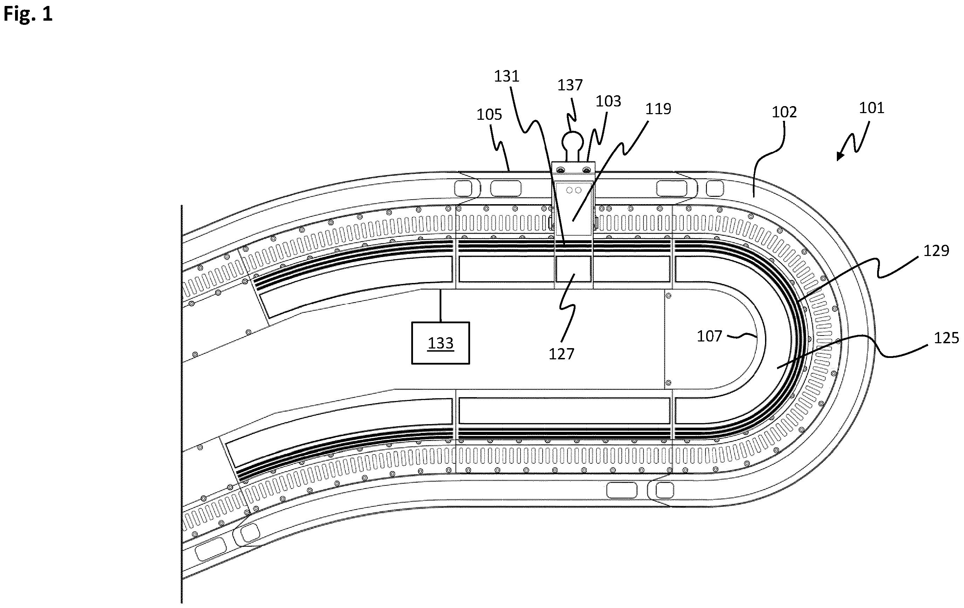

Fig. 1 zeigt einen Kurvenbereich eines lineares Transportsystems 101 in der Aufsicht beziehungsweise als seitliche Ansicht, je nachdem wie das lineare Transportsystem im Raum orientiert ist. Als Teile einer Schlittenführung 102 des linearen Transportsystems 101 sind in Fig. 1 fünf Motormodule 107 dargestellt, auf denen jeweils ein Führungsschienenelement 105 montiert ist. Die Motormodule 107 sind dabei teilweise unterschiedlich ausgestaltet, wobei eine Anordnung aus einem gebogenen Motormodul, einem geraden Motormodul, einem 180-Grad-Motormodul, einem geraden Motormodul und einem gebogenen Motormotor gezeigt ist. Die Führungsschienenelemente 105 der Motormodule 107 sind jeweils an die Form des Motormoduls angepasst, also gebogen, gerade oder um 180-Grad gebogen. Die Schlittenführung 102 des linearen Transportsystems 101 bildet einen Fahrweg, dessen Bahn in einer Ebene liegt.

Das lineare Transportsystem 101 weist eine Schlittenführung-Steuereinheit 133 auf, die mit den Motormodulen 107 verbunden ist, um deren Betrieb zu steuern. Es kann, wie in Fig. 1 gezeigt, vorgesehen sein, dass die Schlittenführung-Steuereinheit 133 nur an ein einzelnes Motormodul 107 angeschlossen ist, wobei die weiteren Motormodule 107 dann mit dem angeschlossenen Motormodul 107 über einen Kommunikationsbus verbunden sind, um Signale zwischen der Schlittenführung-Steuereinheit 133 und den verschiedenen Motormodulen 107 austauschen zu können. Die Schlittenführung-Steuereinheit kann aber auch alternativ mit jedem oder mehreren Motormodulen verbunden sein. Ferner kann die Schlittenführung-Steuereinheit kann auch aus mehreren Einheiten, die verteilt angeordnet sind, zusammensetzen.

Abhängig von der Anwendung kann eine beliebige Anzahl von Schlitten 103 auf der Schlittenführung 102 des linearen Transportsystems 101 vorgesehen sein. Auf dem in Fig. 1 gezeigten Ausschnitt der Schlittenführung 102 wird ein einzelner Schlitten 103 auf der Schlittenführung 102 geführt.

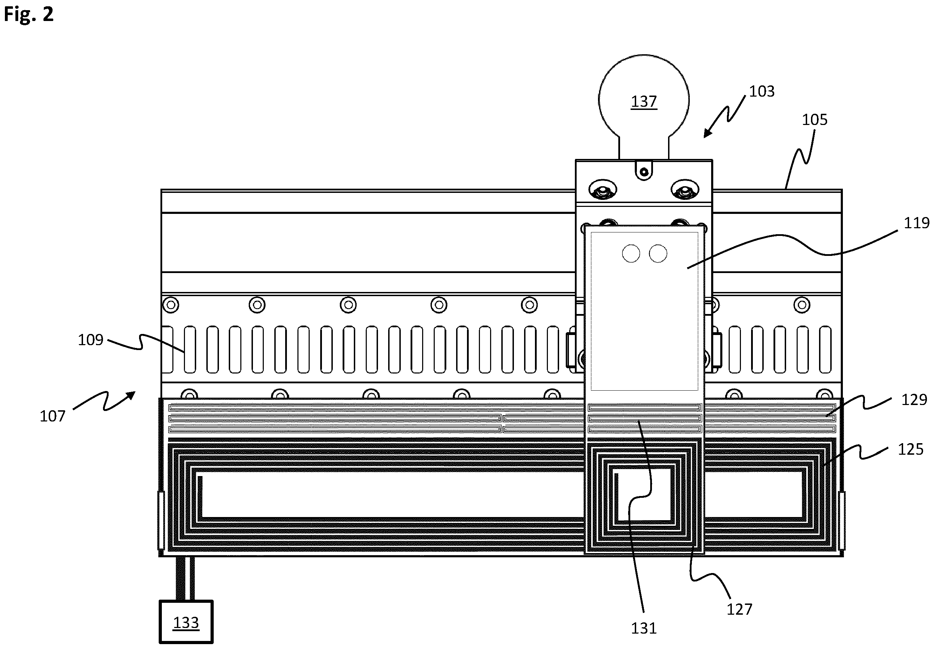

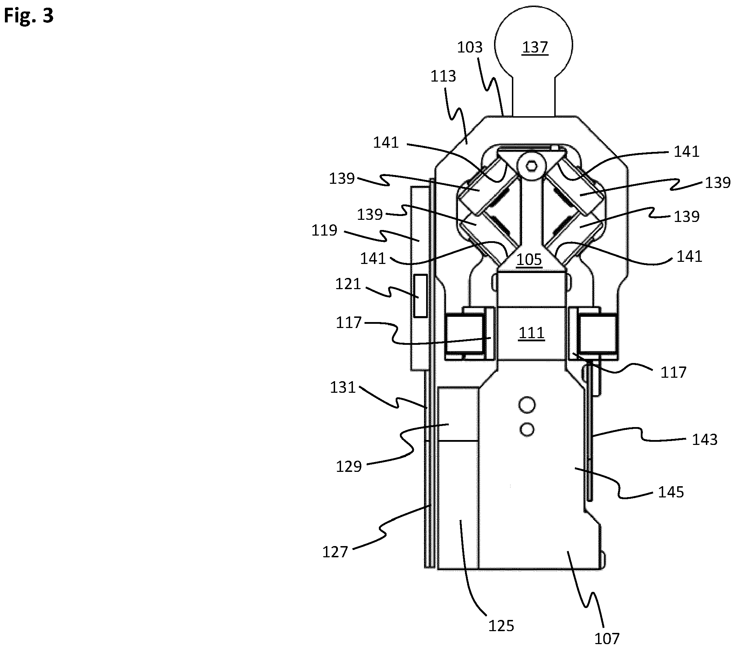

Fig. 2 zeigt das Motormodul 107 mit dem Führungsschienenelement 105 aus Fig. 1, auf dem der einzelne Schlitten 103 geführt ist. Fig. 3 zeigt eine Schnittansicht durch das Motormodul 107 mit dem Führungsschienenelement 105 und dem geführten Schlitten 103 aus Fig. 2.

Die Motormodule 107 der Schlittenführung 102 und die auf der Schlittenführung 102 bewegten Schlitten 103 bilden den Linearmotor des linearen Transportsystems 101. Die Motormodule 107 als der Stator des Linearmotors umfassen jeweils eine Mehrzahl von Polzähnen 109, die voneinander beabstandet entlang des Motormoduls 107 angeordnet sind. Die Polzähne 109 sind im Wesentlichen stabförmig ausgebildet und quer zu dem Motormodul 107 orientiert. Jeder zweite Polzahn 109 ist mit einer Antriebsspulenwicklung 111, die in Fig. 3 in der Schnittansicht gezeigt ist, versehen. Die gewickelten Polzähne 109 bilden die Antriebsspulen des Linearmotors.

Die Schlitten 103 sind, wie die Darstellung in Fig. 3 zeigt, im Wesentlichen symmetrisch bezüglich einer Längsmittelebene aufgebaut. Ein auf dem Führungsschienenelement 105 angeordneter, U-förmiger Schlittenkopf 113 weist zwei Schenkel auf, auf deren Innenseiten jeweils vier Laufrollen 139 als Führungsmechanik für den Schlitten 103 auf dem Führungsschienenelement 105 vorgesehen sind. Jede Laufrolle 139 ist dabei einer innenliegenden Lauffläche 141 des im Querschnitt T-förmigen Führungsschienenelements 105 zugeordnet.

An den Innenseiten der beiden Schenkelenden des Schlittenkopfes 113 sind jeweils Magnetplatten 117 angeordnet, die die Antriebsspulenwicklung 111 des Motormoduls 107 umgreifen. Die Magnetplatten 117 und die dazwischenliegenden Antriebsspulenwicklung 111 bildet einen Doppelluftspalt-Linearmotor aus. Die Anzugskräfte der Magnetplatten 117 werden auf beiden Seiten der Antriebsspulenwicklung 111 des Motormoduls 107 kompensiert, so dass die Laufrollen 139 des Schlittens 103 verschleißarm auf den Laufflächen 141 des Führungsschienenelements 105 abrollen.

Wie der Querschnitt in Fig. 3 zeigt, schließt sich an den einen Schenkel des Schlittenkopfes 113 ein Positionselement 143 in Form einer Geberfahne mit einer metallischen Fläche an, die sich parallel zu den Motormodulen 107 der Schlittenführung 102 erstreckt. Das Positionselement 143 am Schlitten 103 befindet sich dabei auf der Schlittenseite, die der in den Ansichten in Fig. 1 und Fig.2 dargestellten Schlittenseite gegenüberliegt und ist deshalb dort nicht gezeigt.

Gleiches gilt für die an den Motormodulen 107 der Schlittenführung 102 vorgesehene Positionssensoreinrichtung 145, die in Zusammenwirkung mit dem Positionselement 143 am Schlitten 103 die Position des Schlittens 103 ermittelt. Die Positionssensoreinrichtung 145, die im Motormodul 107 des Positionselement 143 des Schlittens 103 gegenüberliegend angeordnet ist, ist wenigstens eine längs des Motormoduls 107 sich erstreckende bestromte Spule, deren Strom durch das Positionselement 143 verändert wird, um so die Position des Positionselements 143 und damit die Position des Schlittens 103 zu detektieren.

Alternativ zu einer Positionserfassung des Schlittens 103 mit einem eigenständigen System aus dem Positionselement 143 am Schlitten 103 und der Positionssensoreinrichtung 145 in den Motormodulen 107 der Schlittenführung 102 können die Positionsdaten des Schlittens 103 auch anhand einer Bestromung der Antriebsspulenwicklungen 111 der Motormodule 107 ermittelt werden. Eine weitere Möglichkeit zur Ermittlung der Positionsdaten besteht darin, mit Hilfe von an den Motormodulen 107 der Schlittenführung 102 angeordneten Magnetfeldsensoren, beispielsweise 3D-Hall-Sensoren, die Magnetplatten 117 am Schlitten 103 zu erfassen.

Für eine Datenübertragung zwischen der Schlittenführung 102 und dem Schlitten 103 weisen die Motormodule 107, wie die Seitenansichten in Fig. 1 und Fig. 2 zeigen, ein sich entlang der Schlittenführung 102 erstreckendes Antennenarray 129 auf. Am Schlitten 103 ist jeweils eine weitere Schlittenantenne 131 vorgesehen, die sich in einem Aufsatz 119 am Schlittenkopf 113 befindet. Der Aufsatz 119 ist, wie Fig. 3 zeigt, dem als Geberfahne mit metallischer Fläche ausgebildeten Positionselement 143 gegenüberliegend an dem anderen Schenkel des Schlittenkopfes 113 angeordnet und erstreckt über das Schenkelende hinaus parallel zu den Motormodulen 107 der Schlittenführung 102. Die Schlittenantenne 131 ist dabei im Schlittenkopfaufsatz 119 in dem Bereich fixiert, der dem Antennenarray 129 gegenüberliegt.

Mit Hilfe des Antennenarrays 129 und der Schlittenantenne 131 können Daten zwischen der Schlittenführung 102 und dem Schlitten 103 ausgetauscht werden. Alternativ kann eine Datenübertragung jedoch auch über eine Wireless-LAN-, eine Bluetooth-, eine Infrarot-, eine 5G-Verbindung, eine DECT-Standard- oder eine optische Verbindung sowohl direkt zwischen dem Schlitten 103 und der Schlittenführung-Steuereinheit 133 der Motormodule 107 ohne Zwischenschaltung von Bauelementen der Schlittenführung 102 erfolgen.

Eine Datenübertragung von der Schlittenführung 102 zum Schlitten 103 des linearen Transportsystems 101 erfolgt so, dass zunächst von der Schlittenführung-Steuereinheit 133 die Positionsdaten der Schlittens 103 mit Hilfe der Positionssensoreinrichtung 145 an der Schlittenführung 102 in Zusammenwirkung mit dem Positionselement 143 am Schlitten 103 ermittelt werden. Dann wählt die Schlittenführung-Steuereinheit 133 die Antenne aus dem Antennenarray 129 der Schlittenführung 102 aus, die dem Schlitten 103 und damit der Schlittenantenne 131 gegenüberliegt. Anschließend gibt die Schlittenführung-Steuereinheit 133 ein Datenpaket an das Motormodul 107 aus, an dem die ausgewählte Antenne angeordnet ist. Das Datenpaket umfasst ein Steuersignal, das die ausgewählte Antenne identifiziert, und ein von der ausgewählten Antenne zu übertragendes Datensignal. Das Datensignal beinhaltet eine Startsequenz und Nutzdaten, wobei die Startsequenz eingerichtet ist, einen Datenempfang durch den Schlitten 103 zu triggern. Der Schlitten 103 weist zum Datenempfang eine an die Schlittenantenne 131 angeschlossene Schlitten-Steuereinheit 121 auf, die im Schlittenkopfaufsatz 119 angeordnet ist.

Der Datenaustausch zwischen der Schlittenführung 102 und dem Schlitten 103 erfolgt wechselseitig. Auch die Schlitten-Steuereinheit 121 kann ein Datenpaket über die Schlittenantenne 131 zum Antennenarray 129 der Schlittenführung 102 übertragen, wobei die Antenne aus dem Antennenarray 129, die dem Schlitten 103 und damit der Schlittenantenne 131 gegenüberliegt, dann das Datenpaket empfängt und an die Schlittenführung-Steuereinheit 133 weiterleitet.

Auf dem Schlitten 103 ist weiter eine Last 137 angeordnet. Die Last 137 ist in den Figuren in Form eines Platzhalters eingezeichnet und kann beispielsweise als elektrisches Werkzeug ausgestaltet sein.

Um die Schlitten-Steuereinheit 121 und die Last 137 mit elektrischer Energie zu versorgen, ist eine induktive Energieübertragungseinrichtung vorgesehen. Die induktive Energieübertragungseinrichtung weist ein Array von Energiesendespulen 125 auf, das an das Antennenarray 129 angrenzend sich entlang der Schlittenführung 102 erstreckt. Wie die Ansichten in Fig. 1 und 2 zeigen, ist jedem Motormodul 107 jeweils wenigstens eine Energiesendespule 125 zugeordnet, um eine durchgehende induktive Energieübertragung entlang der Schlittenführung 102 zu ermöglichen. Statt einem geschlossenen Array von Energiesendespulen können auch nur einzelne Motormodule eine Energiesendespule 125 aufweisen, um eine punktuelle induktive Energieübertragung durchzuführen.

Die induktive Energieübertragungseinrichtung weist an jedem Schlitten 103 eine Energieempfangsspule 127 auf, die sich, wie die Schnittansicht in Fig. 3 zeigt, am Schlittenkopfaufsatz 119 angrenzend an die Schlittenantenne 131 befindet. Die Energieempfangsspule 127 ist dabei so am Schlittenkopfaufsatz 119 angeordnet, dass sie dem Array von Energiesendespulen 125 an der Schlittenführung 102 gegenüberliegt, wobei die Energieempfangsspule 127 am Schlitten 103 die Energiesendespule 125 am Motormodul 107 abdeckt. Die von der Energiesendespule 125 am Motormodul 107 eingenommene Fläche ist rechteckig, wohingegen die Energieempfangsspule 127 am Schlitten 103 quadratisch ausgeführt sein kann. Die Energieempfangsspule 127 am Schlitten 103 kann jedoch auch rechteckig ausgestaltet sein.

Über die Größe des Luftspalt zwischen der Energiesendespule 125 und der Energieempfangsspule 127 kann auch die Höhe der übertragenen Energie mitbestimmt werden. Um den Luftspalt auch aufgrund von Fertigungstoleranzen möglichst optimal einstellen zu können, kann es vorteilhaft sein, am Schlitten 103 eine Einstellmöglichkeit vorzusehen, beispielsweise in Form einer Schraube, mit der der Abstand zwischen dem Schlittenkopfaufsatz 119 und dem Schlittenkopf 113 und damit der Luftspalt eingestellt und nachjustiert werden kann.

Die Energiesendespule 125 am Motormodul 107 weist eine Primärwicklung 126 mit einer durchgehenden Wicklungsleiterbahn auf. Eine Sekundärwicklung 128 der Energieempfangsspule 127 am Schlitten 103 ist dagegen in zwei Wicklungsabschnitte, einen Steuerspannungs-Wicklungsabschnitt 146 und einen Lastspannungs-Wicklungsabschnitt 147 aufgeteilt, die voneinander getrennte Wicklungsleiterbahnen besitzen.

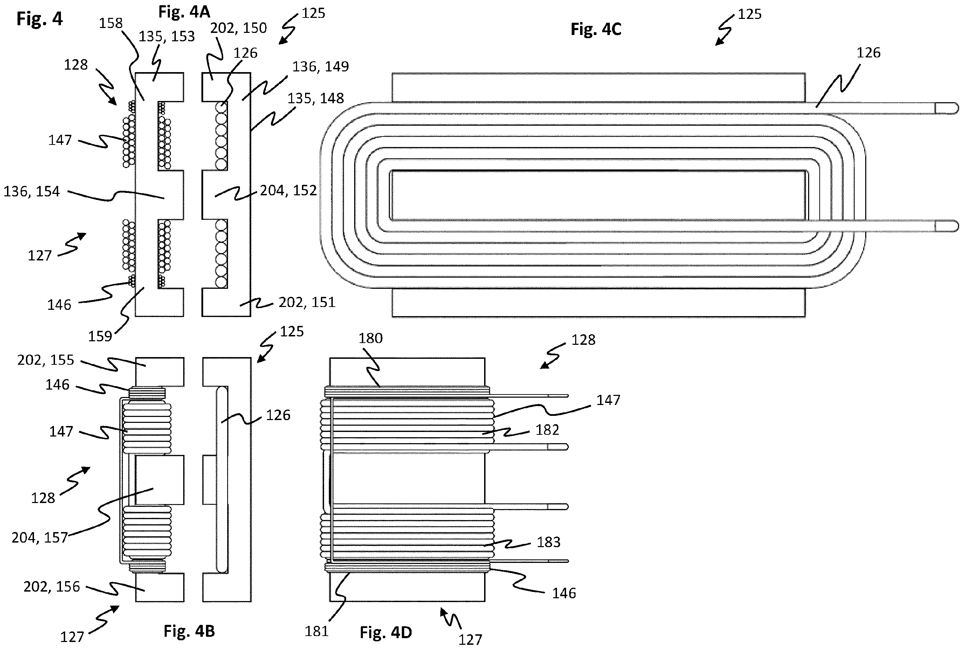

Fig. 4 zeigt eine erste Ausführungsform der induktiven Energieübertragungseinrichtung in stark schematischer Darstellung, wobei Fig. 4A eine Schnittansicht durch die induktive Energieübertragungseinrichtung, Fig. 4B eine seitliche Aufsicht auf die induktive Energieübertragungseinrichtung, Fig. 4C eine Aufsicht auf die Energiesendespule 125 betrachtet aus der Perspektive der Energieempfangsspule 127 und Fig. 4D eine Aufsicht auf die Energieempfangsspule 127 betrachtet in Richtung der Energiesendespule 125 zeigen.

Die Energiesendespule 125 und die Energieempfangsspule 127 weisen jeweils einen im Querschnitt E-förmigen Spulenkörper 135, wobei der Spulenkörper ein Energiesendespule-Spulenkörper 148 und/oder ein Energieempfangsspule-Spulenkörper 153 sein kann, mit zwei Außenarmrippen 202, wobei die Außenarmrippe als erste Energiesenespule-Außenarmrippe 150 und/oder als zweite Energiesendespule-Außenarmrippe 151 und oder als erste Energieempfangsspule-Außenarmrippe 155 und/oder als zweite Energieempfangsspule-Außenarmrippe 156 bezeichnet werden kann, und einer dazwischenliegenden Zentralrippe 204, wobei die Zentralrippe als Energiesendespule-Zentralrippe 152 und/oder als Energieempfangsspule-Zentralrippe 157 auf einer Spulenkörperfläche 136, wobei die Spulenkörperfläche als Energiesendespule-Spulenkörperfläche 149 und/oder als Energiempfangsspule-Spulekörperfläche 154 bezeichnet werden kann, auf. Die E-förmigen Querschnitte der Energiesendespule-Spulenkörper 148 von Energiesendespule 125 und der Energieempfangsspule-Spulenkörper 153 von Energieempfangsspule 127 sind einander zugewandt, wobei die Außenarmrippen 202 und die Zentralrippen 204 auf der Spulenkörperfläche 136 sich gegenüberliegen und zwischen den Spulenkörpern 135 ein Luftspalt ausgebildet ist.

Die Spulenkörper 135 sind vorzugsweise aus ferromagnetischem Material und können ein Eisenkörper, ein Hochfrequenzeisenkörper oder ein Ferritkörper sein. Das ferromagnetische Material des Spulenkörpers 135 sorgt für eine hohe Induktivität. Die Spulenkörper 135 können aber auch aus einem nicht ferromagnetischen Material hergestellt werden, um eine Induktivität unabhängig vom Spulenstrom zu bewirken.

Die Energiesendespule 125 ist, wie die Aufsicht in Fig. 4C zeigt, als Flachspule ausgeführt. Die Wicklungsleiterbahn einer Primärwicklung 126 der Energiesendespule 125 ist spiralförmig um die Energiesendespule-Zentralrippe 152 des Energiesendespule-Spulenkörpers 148 gewickelt und erstreckt sich zwischen der Energiesendespule-Zentralrippe 152 und der ersten Energiesendespule-Außenarmrippe 150 und zweiten Energiesendespule-Außenarmrippe 151, wie die Schnittansicht in Fig. 4A und die Seitenansicht in Fig. 4B zeigen. Die beiden freien Enden der Wicklungsleiterbahn sind, wie die Aufsicht in Fig. 4C zeigt, seitlich nach außen geführt und dienen als Anschlüsse zum Anlegen einer elektrischen Spannung.

In der in Fig. 4 gezeigten Ausführungsform weist die Primärwicklung 126 sechs Leiterbahnwindungen auf, die voneinander isoliert sind. Es besteht jedoch die Möglichkeit, mehr oder weniger Wicklungen vorzusehen, je nachdem, welcher Induktivitätswert in der Primärwicklung 126 erzielt werden soll. Auch können die Spulenwicklungen abhängig von der Größe der Spulenkörperfläche 136 mehrlagig ausgeführt werden.

Eine Sekundärwicklung 128 der Energieempfangsspule 127 ist so gewickelt, dass die Wicklungsleiterbahn sich um die Energieempfangsspule-Spulenkörperfläche 154 herum zwischen der ersten Energieempfangsspule-Außenarmrippe 155 und der zweiten Energieempfangsspule-Außenarmrippe 156 und der Energieempfansspule-Zentralrippe 157 erstreckt, wie die Schnittansicht in Fig. 4A und die Seitenansicht in Fig. 4B zeigen. Die von der Sekundärwicklung 128 aufgespannte Energieempfangsspule-Spulenkörperfläche 154 ist so senkrecht zur von der Primärwicklung 126 aufgespannten Energiesendespule-Spulenkörperfläche 154 ausgerichtet.

Die Wicklungsleiterbahn der Sekundärwicklung 128 der Energieempfangsspule 127 ist unterteilt in einen Steuerspannung-Wicklungsabschnitt 146 und einen Lastspannung-Wicklungsabschnitt 147. Der Steuerspannung-Wicklungsabschnitt 146 und der Lastspannung-Wicklungsabschnitt 147 sind bei der in Fig. 4 gezeigten Ausführungsform ineinander verschachtelt ausgeführt, wobei der Steuerspannung-Wicklungsabschnitt 146 und der Lastspannung-Wicklungsabschnitt 147 jeweils symmetrisch in Bezug auf die Energieempfangsspule-Zentralrippe 157 des Energieempfangsspule-Spulenkörpers 153 ausgebildet sind.

Wie die Schnittansicht in Fig. 4A und die Seitenansicht in Fig. 4B zeigen, weisen der Steuerspannung-Wicklungsabschnitt 146 und der Lastspannung-Wicklungsabschnitt 147 jeweils einen ersten Steuerspannung-Wicklungsabschnitt-Wicklungssektor 180 und einen ersten Lastspannung-Wicklungsabschnitt-Wicklungssektor 182 in einem ersten Energieempfangsspule-Spulenkörperfläche-Abschnitt 158 der Energieempfangsspule-Spulenkörperfläche 154, der sich zwischen der ersten Energieempfangsspule-Außenarmrippe 155 und der Energieempfangsspule-Zentralrippe 157 erstreckt, und einen zweiten Steuerspannung-Wicklungsabschnitt-Wicklungssektor 181 und einen zweiten Lastspannung-Wicklungsabschnitt-Wicklungssektor 183 in einem zweiten Energieempfangsspule-Spulenkörperfläche-Abschnitt 159 der Energieempfangsspule-Spulenkörperfläche 154, der sich zwischen der Energieempfangsspule-Zentralrippe 157 und der zweiten Energieempfangsspule-Außenarmrippe 156 erstreckt, auf. Die Wicklungsleiterbahnen der beiden Wicklungssektoren des Steuerspannung-Wicklungsabschnittes 146 und des Lastspannung-Wicklungsabschnittes 147 sind jeweils über eine rückseitig an der Spulenfläche angeordnete Leiterbahn miteinander verbunden, wie die Seitenansicht in Fig. 4B zeigt. Wie die Aufsicht in Fig. 4D zeigt, sind die Verbindungsleiterbahnen seitlich am Energieempfangspule-Spulenkörper 153 ausgeführt. Die beiden freien Enden der Wicklungsleiterbahn des Steuerspannung-Wicklungsabschnittes 146 und des Lastspannung-Wicklungsabschnittes 147 dienen jeweils als Anschlüsse zum Abgreifen einer elektrischen Spannung und sind den Verbindungsleiterbahnen gegenüberliegend seitlich am Energieempfangspule-Spulenkörper 153 nach außen ausgeführt. Dabei ist der Wicklungssinn der beiden Wicklungen in den jeweiligen Wicklungssektoren zusätzlich gedreht.

Wie die Schnittansicht in Fig. 4A und die Seitenansicht in Fig. 4B zeigen, sind die Wicklungssektoren des Steuerspannung-Wicklungsabschnittes 146 und des Lastspannung-Wicklungsabschnittes 147 so angeordnet, dass an die erste energieempfangsspule-Außenarmrippe 155 angrenzend der erste Steuerspannung-Wicklungsabschnitt-Wicklungssektor 180 der Steuerspannung-Wicklungsabschnittes um den ersten Energieempfangsspule-Spulenkörperfläche-Abschnitt 158 der Energieempfansspule-Spulenkörperfläche 154 der Energieempfangsspule 127 gewickelt ist. Daran schließt sich dann im ersten Energieempfangsspule-Spulenkörperfläche-Abschnitt 158 der Energieempfangsspule-Spulenkörperfläche 154 der Energieempfangsspule 127 der erste Lastspannung-Wicklungsabschnitt-Wicklungssektor 182 des Lastspannung-Wicklungsabschnittes 147 an, der sich bis zur Energieempfangsspule-Zentralrippe 157 erstreckt. Symmetrisch dazu sind dann die zweiten Wicklungssektoren von Steuerspannung-Wicklungsabschnitt 146 und Leistungsspannungs-Wicklungsabschnitt 147 ausgeführt.

Der zweite Lastspannung-Wicklungsabschnitt-Wicklungssektor 183 des Lastspannungs-Wicklungsabschnittes 147 ist angrenzend an die Energieempfangsspule-Zentralrippe 157 um den zweiten Energieempfangsspule-Spulenkörperfläche-Abschnitt 159 der Energieempfangsspule-Spulenkörperfläche 154 der Energieempfangsspule 127 gewickelt. Im verbleibenden Bereich des zweiten Energieempfangsspule-Spulenkörperfläche-Abschnittes 159 der Energieempfangsspule-Spulenkörperfläche 154 der Energieempfangsspule 127 bis zur zweiten Energieempfangsspule-Außenarmrippe 156 erstreckt sich dann der zweite Steuerspannung-Wicklungsabschnitt-Wicklungssektor 181 des Steuerspannung-Wicklungsabschnittes 146.

Die Verbindungsleiterbahn zwischen dem ersten Lastspannung-Wicklungsabschnitt-Wicklungssektor 182 und dem zweiten Lastspannung-Wicklungsabschnitt-Wicklungssektor 183 des Lastspannung-Wicklungsabschnittes 147 ist dabei anliegend am Energiesendespule-Spulenkörper 148 and entlang der Energieempfangsspule-Zentralrippe 157 geführt. Die Verbindungsleiterbahn zwischen dem ersten Steuerspannung-Wicklungsabschnitt-Wicklungssektor 180 und dem zweiten Steuerspannung-Wicklungsabschnitt-Wicklungssektor 181 des Steuerspannung-Wicklungsabschnittes 146 erstreckt sich über die Wicklungssektoren des Lastspannung-Wicklungsabschnittes 147.

Die verschachtelte Ausbildung von Steuerspannung-Wicklungsabschnitt 146 und Lastspannung-Wicklungsabschnitt 147 der Energieempfangsspule 127 sorgt dafür, dass ein symmetrischer magnetischer Fluss im Energieempfangsspule-Spulenkörper 153 vorliegt. Durch die Anordnung des Steuerspannung-Wicklungsabschnittes 146 und des Lastspannung-Wicklungsabschnittes 147 senkrecht zum Energiempfangsspule-Spulenkörper 153 der Energieempfangsspule 127 wird eine verbesserte Nutzung des Wicklungsraums erreicht. Im Vergleich zu der ebenen Wicklungsausführung um die Energiesendespule-Zentralrippe 153 des Energiesendespule-Spulenkörpers 148 herum ergibt sich bei der Energieempfangsspule 127 durch die senkrechte Wicklungsausführung ein doppelter Wicklungsraum. Der magnetische Durchfluss bleibt dabei aber gleich, weil der magnetische Fluss durch die Zentralrippe des Spulenkörpers höher ist als durch die erste und zweite Außenrippe des Spulenkörpers. Durch den grö-βeren Wicklungsraum kann bei gleichem Querschnitt die Windungszahl der Wicklungen erhöht werden, was zu einer vergrößerten Induktivität führt.

Durch die Aufteilung der Sekundärwicklung 128 der Energieempfangsspule 127 in den Steuerspannung-Wicklungsabschnitt 146 und den Lastspannung-Wicklungsabschnitt 147 können die Energieversorgung der Schlitten-Steuereinheit 121 und die Energieversorgung der Last 137 getrennt optimiert werden. Mit der Windungszahl kann jeweils eine gewünschte Spannung eingestellt werden. So kann der Steuerspannung-Wicklungsabschnitt 146 beispielsweise im Leerlauf eine 24-V-Steuerspannung und der Lastspannung-Wicklungsabschnitt 147 im Leerlauf eine 48-V-Lastspannung liefern. Der Steuerspannung-Wicklungsabschnitt 146 hat dann eine geringere Windungszahl als der Lastspannung-Wicklungsabschnitt 147. Bei der in Fig. 4 gezeigten Ausführungsform weist der Steuerspannung-Wicklungsabschnitt 146 sieben Windungen und der Lastspannung-Wicklungsabschnitt 147 sechzehn Windungen auf, wobei jeweils zwei Windungslagen ausgeführt sind. Je nach Spulenkörpergröße können jedoch auch mehr oder weniger Windungslagen vorgesehen sein.

Durch die Aufteilung der Sekundärwicklung 128 der Energieempfangsspule 127 in einen Steuerspannung-Wicklungsabschnitt 146 und einen Lastspannung-Wicklungsabschnitt 147 besteht weiterhin die Möglichkeit, die Querschnitte der Wicklungsleiterbahnen an den jeweiligen Leistungsbedarf der angeschlossenen elektrischen Verbraucher, also der Schlitten-Steuereinheit 121 und der auf dem Schlitten vorgesehenen Last 137 anzupassen. Da der Leistungsbedarf der Schlitten-Steuereinheit 121 in der Regel geringer ist als der Leistungsbedarf von Sensoren beziehungsweise Aktoren auf dem Schlitten 103 wird der Querschnitt der Wicklungsleiterbahn des Steuerspannung-Wicklungsabschnittes 146 kleiner ausgeführt als der Querschnitt der Wicklungsleiterbahn des Lastspannung-Wicklungsabschnittes 147, wie bei der Ausführungsform in Fig. 4 gezeigt ist.

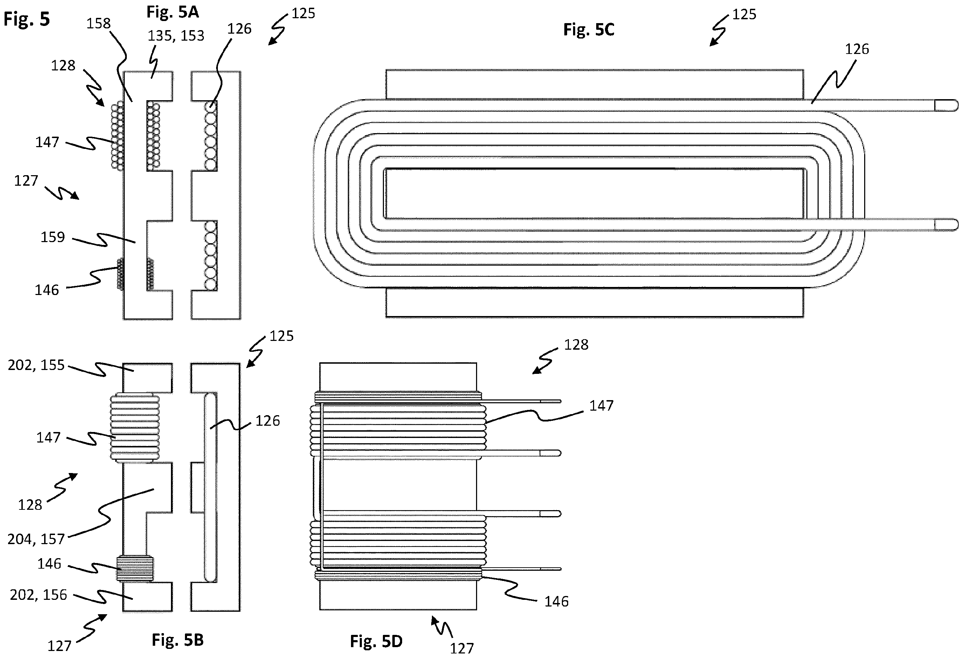

Fig. 5 zeigt eine zweite Ausführungsform der induktiven Energieübertragungseinrichtung in stark schematisierter Darstellung, wobei Fig. 5A eine Schnittansicht durch die induktive Energieübertragungseinrichtung, Fig. 5B eine seitliche Aufsicht auf die induktive Energieübertragungseinrichtung, Fig. 5C eine Aufsicht auf die Energiesendespule 125 betrachtet aus der Perspektive der Energieempfangsspule 127 und Fig. 5D eine Aufsicht auf die Energieempfangsspule 127 betrachtet in Richtung der Energiesendespule 125 zeigen.

Der Aufbau der zweiten Ausführungsform der induktiven Energieübertragungseinrichtung in Fig. 5 entspricht im Wesentlichen dem Aufbau der ersten Ausführungsform der induktiven Energieübertragungseinrichtung in Fig. 4. Die Energieempfangsspulen 127 der ersten und zweiten Ausführungsform der induktiven Energieübertragungseinrichtung sind identisch aufgebaut. Der Unterschied zwischen der ersten und der zweiten Ausführungsform besteht in der Ausgestaltung der Sekundärwicklung 128 der Energieempfangsspule 127.

Statt einer verschachtelten Anordnung des Steuerspannung-Wicklungsabschnittes 146 und des Lastspannung-Wicklungsabschnittes 147 der Energieempfangsspule 127 der ersten Ausführungsform, wie sie in Fig. 4 gezeigt ist, sind bei der in Fig. 5 gezeigten zweiten Ausführungsform der Steuerspannung-Wicklungsabschnitt 146 und der Lastspannung-Wicklungsabschnitt 147 räumlich getrennt voneinander ausgeführt.

Wie Fig. 5 zeigt, ist der Lastspannung-Wicklungsabschnitt 147 zwischen der ersten Energieempfangsspule-Außenarmrippe 155 und der Energieempfangsspule-Zentralrippe 157 um den ersten Energieempfangsspule-Abschnitt 158 der Energieempfangsspule-Spulenkörperfläche 154 gewickelt, wohingegen der Steuerspannung-Wicklungsabschnitt 146 um den zweiten Energieempfangsspule-Spulenkörperfläche-Abschnitt 159 der Energieempfangsspule-Spulenkörperfläche 154 zwischen der Energieempfagnsspule-Zentralrippe 157 und der zweiten Energieempfansspule-Außenarmrippe 156 ausgeführt ist. Der mit einem größeren Wicklungsleiterbahnquerschnitt ausgeführte Lastspannung-Wicklungsabschnitt 147 deckt dabei die gesamte Abschnittsfläche ab. Der Steuerspannung-Wicklungsabschnitt 146, der mit einem kleineren Wicklungsleiterbahnquerschnitt ausgeführt ist und weniger Windungen hat, erstreckt sich angrenzend an die zweite Energieempfangsspule-Außenarmrippe 156 nur über einen Teilbereich des zweiten Energieempfangsspule-Spulenkörperfläche-Abschnitts 159 der Energieempfansspule-Spulenkörperfläche 154.

Durch die getrennte Anordnung des Steuerspannung-Wicklungsabschnittes 146 und des Lastspannung-Wicklungsabschnittes 147 der Energieempfangsspule 127 ist es nicht erforderlich, über die Energieempfangsspule-Zentralrippe 157 des Energiempfangsspule-Spulenkörpers 153 hinweg Verbindungsleiterbahnen für die Wicklungssektoren, wie bei der Ausführungsform in Fig. 4 ausgeführt, vorzusehen, was einen vereinfachten Aufbau ermöglicht.

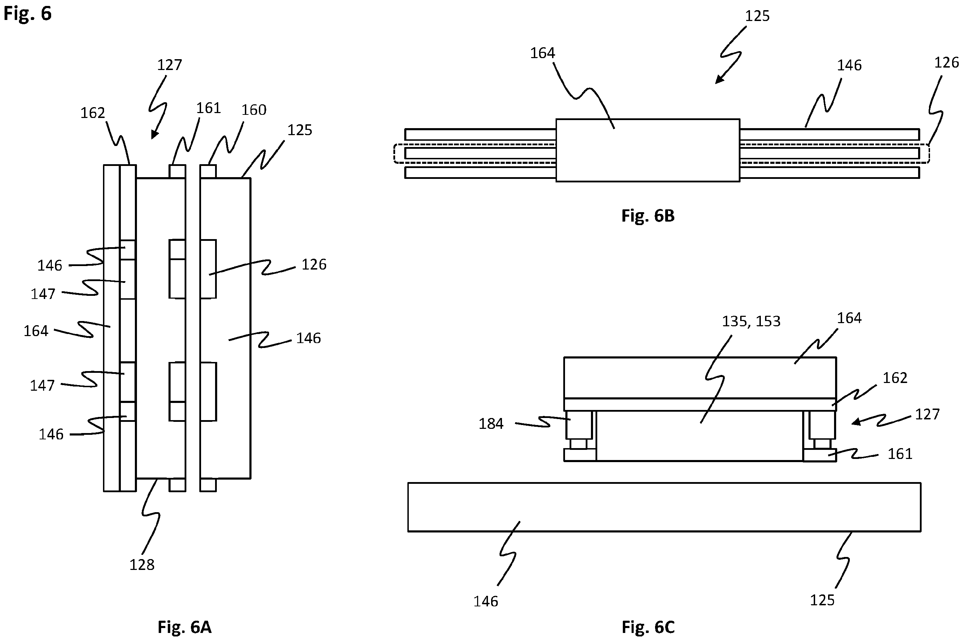

Fig. 6 zeigt stark schematisch die erste Ausführungsform der induktiven Energieübertragungseinrichtung aus Fig. 4 in einer Variante, bei der die Energiesendespule 125 und die Energieempfangsspule 127 jeweils als Platinenspulen ausgeführt sind. Ferner ist bei der Variante zusätzlich eine Kühlungseinrichtung 164 an der Energieempfangsspule 127 vorgesehen. Fig. 6A zeigt dabei eine Schnittansicht durch die induktive Energieübertragungseinrichtung. Fig. 6B zeigt eine Aufsicht auf die induktive Energieübertragungseinrichtung. Fig. 6C zeigt eine Ansicht der induktiven Energieübertragungseinrichtung von unten.

Bei der Platinenspulen-Ausführung sind statt Wicklungsleiterbahnen gedruckte Leiterbahnen auf einer Leiterplatte aus elektrisch isoliertem Material vorgesehen. Die als Flachspule ausgebildete Energiesendespule 125 wird dabei so ausgebildet, dass auf einer Energiesendespule-Leiterplatte 160 spiralförmig die Leiterbahnen aufgedruckt sind. In der Energiesendespule-Leiterplatte 160 sind zusätzlich Aussparungen vorgesehen, in die der im Querschnitt E-förmige Energiesendespule-Spulenkörper 148 eingreift, wobei die gedruckten Leiterbahnen sich zwischen der Zentralrippe und der ersten und zweiten Außenarmrippen des Spulenkörpers befinden.

Die Energieempfangsspule 127 weist eine erste Energieempfangsspule-Leiterplatte 161 und eine zweite Energieempfangsspule-Leiterplatte 162 auf. Auf der ersten Energieempfangsspule-Leiterplatte 161 sind erste Leiterbahnabschnitte des Steuerspannung-Wicklungsabschnittes 146 und erste Leiterbahnabschnitte des Lastspannung-Wicklungsabschnittes 147 und auf der zweiten Energieempfangsspule-Leiterplatte 162 sind zweite Leiterbahnabschnitte des Steuerspannung-Wicklungsabschnittes 146 und zweite Leiterbahnabschnitte des Lastspannung-Wicklungsabschnittes 147 aufgedruckt. Die Ansicht in Fig. 6C zeigt dann weiter, dass die ersten Leiterbahnabschnitte des Steuerspannung-Wicklungsabschnittes 146 auf der ersten Energieempfansspule-Leiterplatte 161 und die zweiten Leiterbahnabschnitte des Steuerspannung-Wicklungsabschnittes 146 auf der zweiten Energieempfangsspule-Leiterplatte 162 beziehungsweise die ersten Leiterbahnabschnitte des Lastspannung-Wicklungsabschnittes 147 auf der ersten Energieempfangsspule-Leiterplatte 161 und die zweiten Leiterbahnabschnitte des Lastspannung-Wicklungsabschnittes 147 auf der zweiten Energieemfangspule-Leiterplatte 162 jeweils über elektrische Steckverbinder 184 miteinander verbunden sind, um einen geschlossenen Steuerspannung-Wicklungsabschnitt 146 beziehungsweise einen geschlossenen Lastspannung-Wicklungsabschnitt 147 der Sekundärwicklung 128 der Energieempfangsspule 127 auszubilden.

Wie die Schnittansicht in Fig. 6A zeigt, sind in der ersten Energieempfangsspule-Leiterplatte 161 der Energieempfangsspule 127 Aussparungen für den im Querschnitt E-förmigen Energieempfangsspule-Spulenkörper 153 vorgesehen, der zwischen der ersten Energieempfangsspule-Leiterplatte 161 und der zweiten Energieempfangsspule-Leiterplatte 162 im Eingriff in die Aussparungen der ersten Energieempfangsspule-Leiterplatte 161 angeordnet ist.

Auf der der Energiesendespule 125 abgewandten Seite der Energieempfangsspule 127 ist die Kühleinrichtung 164 für die Sekundärwicklung 128 der Energieempfangsspule 127 angeordnet. Die Anbringung der Kühlungseinrichtung 164 an der Sekundärwicklung 128 ist möglich, da durch die senkrechte Ausführung der Sekundärwicklung 128 eine Wicklungsseite außerhalb des durch die Energiesendespule 125 und die Energieempfangsspule 127 gebildeten Spannungstransformators liegt und so zugänglich ist. Die Kühleinrichtung 164 kann dann so ausgebildet werden, dass die Kühleinrichtung 164 aus dem Schlittenkopfaufsatz 119 nach außen vorragt und durch den Fahrtwind des Schlittens 103 gekühlt werden kann. Hierfür eignen sich dann insbesondere Kühlrippen als Kühlkörper.

Die in Fig. 6 gezeigte Variante der ersten Ausführungsform der induktiven Energieübertragungseinrichtung aus Fig. 4, bei der die Energiesendespule 125 und die Energieempfangsspule 127 jeweils als Platinenspulen ausgeführt sind, kann auch bei der in Fig. 5 gezeigten zweiten Ausführungsform der induktiven Energieübertragungseinrichtung verwendet werden. Ferner kann die Kühlungseinrichtung 164 auch bei den Ausführungsformen in Fig. 4 und Fig. 5 mit Wicklungsleiterbahnen statt gedruckten Leiterbahnen vorgesehen sein. Die in Fig. 6 gezeigte Variante kann dann wiederum auch ohne eine Kühlungseinrichtung 164 an der Energieempfangsspule 127 ausgeführt werden. Ferner besteht auch die Möglichkeit, die induktiven Energieübertragungseinrichtung mit einer Platinenspule und einer gewickelten Spule als Energiesendespule beziehungsweise Energieempfangsspule auszuführen.

Die Energieübertragung von der die Motormoduleinrichtung aufweisenden Schlittenführung 102 auf die Schlitten 103 erfolgt auf folgende Weise: Beim Verfahren des Schlittens 103 werden laufend die Positionsdaten des Schlittens 103 ermittelt. Die Schlittenführung-Steuereinheit 133 wählt dann das Motormodul 107 aus, bei dem die Energieempfangsspule 127 des Schlittens 103 der Energiesendespule 125 des Motormoduls 107 gegenüberliegt. Es können dabei auch gleichzeitig mehrere Motormodule 107 ausgewählt werden, insbesondere dann, wenn sich die Energieempfangsspule 127 des Schlittens 103 mit den Energiesendespulen 125 von benachbarten Motormodulen 107 überlappt. Die Schlittenführung-Steuereinheit 133 legt weiter die von der Energiesendespule 125 des ausgewählten Motormoduls 107 zu übertragende Energiemenge fest. Die Energiesendespule 125 der induktiven Energieübertragungseinheit wird dann entsprechend mit einer Wechselspannung beziehungsweise mit einem Wechselstrom beaufschlagt, um die zu übertragende Energiemenge bereitzustellen.

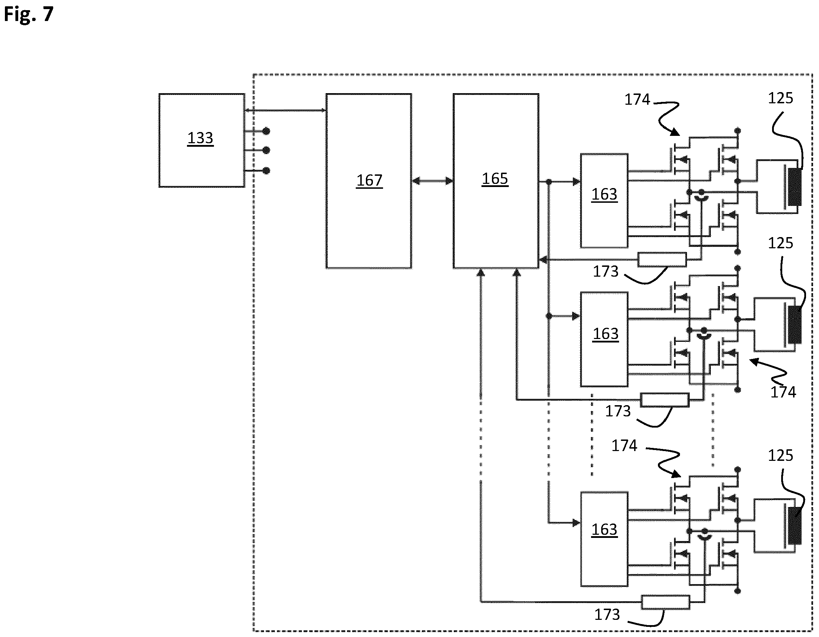

Fig. 7 zeigt ein elektrisches Schaltbild der Schlittenführung 102 zur Ansteuerung der Energiesendespulen 125. Jede Energiesendespule 125 ist mit einem Energiesendepule-Schalter 174 verbunden, der in der in Fig. 7 gezeigten Ausführungsform als H-Brücke ausgeführt ist. Der energiesendespule-Schalter 174 wird mit Hilfe eines vorgeschalteten Energiesendespule-Treibers 163 betrieben, der wiederum von einem Energiesendespule-Mikrocontroller 165 angesteuert wird. Der Energiesendespule-Mikrocontroller 165 kann dabei, wie in Fig. 7 gezeigt, die Energeiesendespule-Treiber 163 aller Motormodule 107 ansteuern. Es besteht auch die Möglichkeit, für jeden Energiesendespule-Treiber 163 oder für Gruppen von Treibern, insbesondere eines Motormoduls jeweils einen getrennten Mikrocontroller vorzusehen. Der Energiesendespule-Mikrocontroller 165 ist über eine Energiesendespule-Kommunikationsschnittstelle 167 mit der Schlittenführung-Steuereinheit 133 verbunden. Zur Leistungssteuerung ist der Energiesendespule-Schalter 174 weiter mit einem Energiesendespule-Strommesser 173 versehen, der an den Energiesendespule-Mikrocontroller 165 angeschlossen ist, um dem Energiesendespule-Mikrocontroller 165 Rückmeldung über die von der zugeordneten Energiesendespule 125 abgegebene Energiemenge zu geben.

Die an die Primärwicklung 126 der Energiesendespule 125 angelegte Spannung ändert den magnetischen Fluss in der der Energieempfangsspule 127, was wiederum zu einer Wechselspannung im Steuerspannung-Wicklungsabschnitt 146 beziehungsweise im Lastspannung-Wicklungsabschnitt 147 der Sekundärwicklung 128 der Energieempfangsspule 127 führt. Durch die entsprechende Auslegung des Steuerspannung-Wicklungsabschnittes 146 beziehungsweise des Lastspannung-Wicklungsabschnittes 147 kann beispielsweise im Steuerspannung-Wicklungsabschnitt 146 eine Leerspannung von 24 V und im Lastspannung-Wicklungsabschnitt 147 eine Leerspannung von 48 V erzielt werden. Die gewünschten Spannungswerte können über die Anzahl der Windungen der Wicklungsabschnitte beziehungsweise den jeweiligen Leiterbahnquerschnitt eingestellt werden.

Der Steuerspannung-Wicklungsabschnitt 146 und der Lastspannung-Wicklungsabschnitt 147 sind jeweils mit Gleichrichtern verbunden. Weiterhin kann zur Glättung im Steuerspannungskreis beziehungsweise im Lastspannungskreis zusätzlich ein Kondensator vorgesehen sein. Die Schlitten-Steuereinheit 121 kann auch dazu verwendet werden, die Lastspannung zu überwachen und zu beeinflussen. Im Lastspannungskreis ist dann ein Schalter angeordnet, um die Last 137 gegebenenfalls vom Lastspannung-Wicklungsabschnitt 147 abtrennen zu können. Der Schalter kann dabei von der Schlitten-Steuereinheit 121 betätigt werden. So kann die Schlitten-Steuereinheit 121 bei Lastschwankungen im Lastspannungskreis die Verbindung zwischen dem Lastspannung-Wicklungsabschnitt 147 und der Last 137 mit Hilfe des Schalters unterbrechen, um zu verhindern, dass beispielsweise bei einem plötzlichen Abfall der Belastung im Lastspannungskreis eine Überspannung auftritt, die zu einer Zerstörung der Elektronik im Lastspannungskreis führen kann. Auch kann die Abschaltung des Lastspannungskreises dazu dienen, notfalls Energie einzusparen.

Die direkte Steuerung des Lastspannungskreises auf dem Schlitten 103 durch die Schlitten-Steuereinheit 121 kann im Vergleich zu einer Vorgehensweise, bei der der Spannungswert von der Schlittenführungs-Steuereinheit 133 eingestellt wird, wofür erst eine Übertragung der Spannungswerte vom Schlitten 103 auf die Schlittenführung-Steuereinheit 133 erforderlich ist, wesentlich schneller erfolgen.

Im Steuerspannungskreis und im Lastspannungskreis kann außerdem jeweils zusätzlich ein Energiespeicher vorgesehen sein, um Energie zwischenzuspeichern, die dann, falls erforderlich, an die Schlitten-Steuereinheit 121 und/oder die Last 137 abgegeben werden kann. Dadurch, dass der Steuerspannung-Wicklungsabschnitt 146 und der Lastspannung-Wicklungsabschnitt 147 zwei separate Spannungen auf dem Schlitten 103 zur Verfügung stellen, lässt sich eine verbesserte Energiespeicherung erreichen. Es kann dann bedarfsgerecht nach Auswahl des jeweiligen Energiespeichers im Steuerspannungskreis beziehungsweise Lastspannungskreis entschieden werden, ob die Steuerspannung oder die Lastspannung gepuffert werden soll.

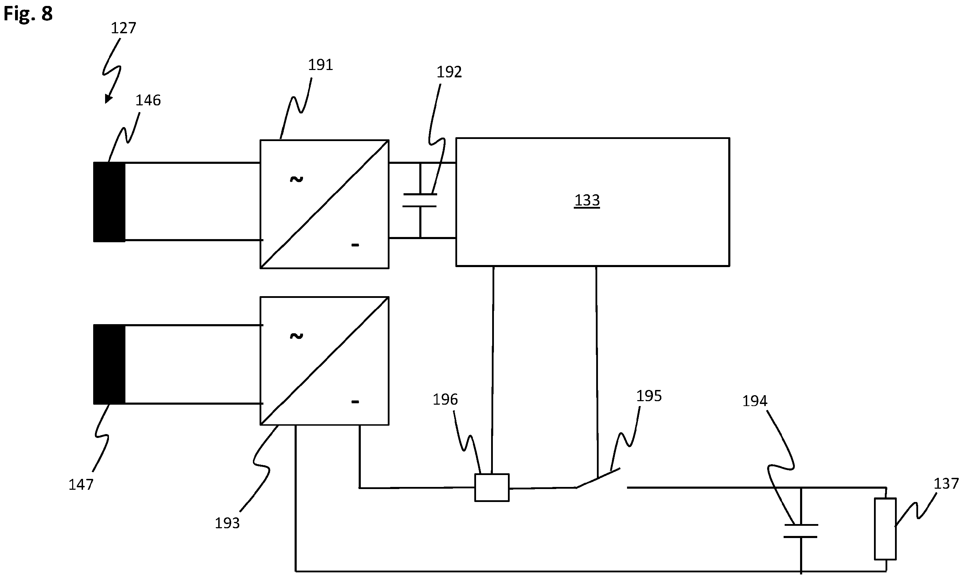

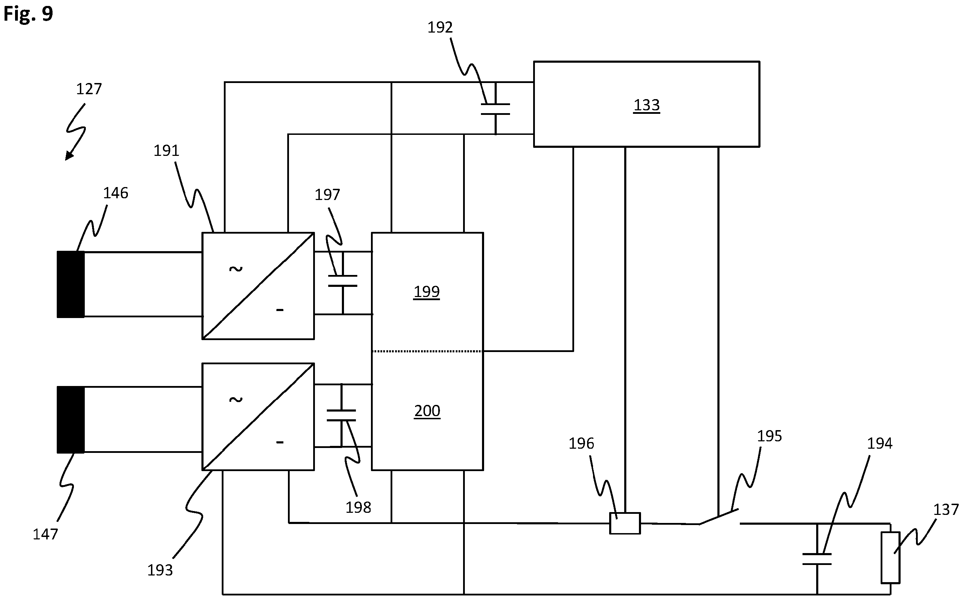

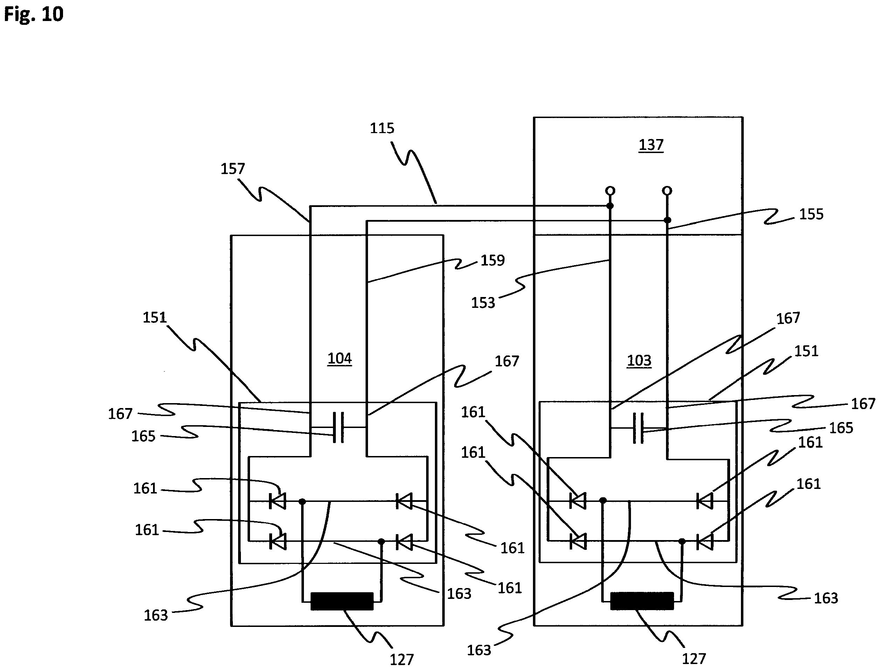

Fig. 8 und Fig. 9 zeigen Schaltbilder für den Steuerspannungskreis und den Lastspannungskreis auf dem Schlitten 103, wobei in der Ausführungsform gemäß Fig. 9 zusätzlich Energiespeicher vorgesehen sind.

Wie Fig. 8 zeigt, ist der Steuerspannung-Wicklungsabschnitt 146 an einen ersten Gleichrichter 191 angeschlossen, der wiederum über einen zwischengeschalteten ersten Glättungskondensator 192 mit der Schlittenführung-Steuereinheit 133 verbunden ist. Der Lastspannung-Wicklungsabschnitt 147 ist mit einem zweiten Gleichrichter 193 verbunden. Der zweite Gleichrichter 193 ist über einen Lastspannungskreis-Schalter 195 und einen zwischengeschalteten zweiten Glättungskondensator 194 an die Last 137 angeschlossen. Der Lastspannungskreis-Schalter 195 ist wiederum mit der Schlittenführung-Steuereinheit 133 verbunden und kann von der Schlittenführung-Steuereinheit 133 geöffnet oder geschlossen werden.

Im Lastspannungsschaltkreis zwischen dem zweiten Gleichrichter 193 und der Last 137 ist ferner ein Lastspannungskreis-Strommesser 196 vorgesehen, der mit der Schlittenführung-Steuereinheit 133 verbunden ist und der der Schlittenführung-Steuereinheit 133 Rückkopplung über den Stromwert im Lastspannungskreis gibt.

Fig. 9 zeigt eine Erweiterung der Schaltung von Fig. 8 mit zusätzlichen Energiespeichern. Parallel zum Steuerspannungskreis ist der Steuerspannung-Wicklungsabschnitt 146 über einen dritten Glättungskondensator 197 mit einem ersten Energiespeicher 199 verbunden. Der erste Energiespeicher 199 ist dann weiter an den Steuerspannungskreis angeschlossen.

Ferner ist ein zweiter Energiespeicher 200 vorgesehen, der parallel zum Lastspannungskreis geschaltet ist und mit dem Lastspannung-Wicklungsabschnitt 147 über einen vierten Glättungskondensator 198 verbunden ist. Der zweite Energiespeicher 200 ist dann weiter mit dem Lastspannungskreis verbunden.

Der erste Energiespeicher 199 und der zweite Energiespeicher 200 werden von der Schlittenführung-Steuereinheit 133 gesteuert. Die Schlittenführung-Steuereinheit 133 kann so abhängig vom Bedarf im Steuerspannungskreis die Steuerspannung im ersten Energiespeicher 199 und vom Bedarf im Lastspannungskreis die Lastspannung im zweiten Energiespeicher 200 puffern. Die gepufferte Energie kann dann wiederum, falls erforderlich, von der Schlittenführung-Steuereinheit 133 in den Steuerspannungskreis beziehungsweise den Lastspannungskreis rückgekoppelt werden.

Wie bei der in Fig. 9 gezeigten Ausführungsform dargestellt, können der erste Energiespeicher 199 und der zweite Energiespeicher 200 einen gemeinsamen Energiespeicher bilden, um bedarfsgerecht und abhängig von der Schlittenanwendung die gepufferte Energie der Schlittensteuerung und/oder der in den Lastspannungskreis geschalteten Sensorik beziehungsweise Aktorik zur Verfügung stellen.

### Bezugszeichenliste

- 101: lineares Transportsystem
- 102: Schlittenführung
- 103: Schlitten
- 105: Führungsschienenelement
- 107: Motormodul
- 109: Polzahn
- 111: Antriebsspulenwicklung
- 113: Schlittenkopf
- 117: Magnetplatte
- 119: Schlittenkopfaufsatz
- 121: Schlitten-Steuereinheit
- 125: Energiesendespule
- 126: Primärwicklung
- 127: Energieempfangsspule
- 128: Sekundärwicklung
- 129: Antennenarray
- 131: Schlittenantenne
- 133: Schlittenführung-Steuereinheit
- 135: Spulenkörper
- 136: Spulenkörperfläche
- 137: Last
- 139: Laufrolle
- 141: Lauffläche
- 143: Positionselement
- 145: Positionssensoreinrichtung
- 146: Steuerspannung-Wicklungsabschnitt
- 147: Lastspannung-Wicklungsabschnitt
- 148: Energiesendespule-Spulenkörper
- 149: Energiesendespule-Spulenkörperfläche
- 150: erste Energiesendespule-Außenarmrippe
- 151: zweite Energiesendespule-Außenarmrippe
- 152: Energiesendespule-Zentralrippe
- 153: Energieempfangsspule-Spulenkörper
- 154: Energieempfangsspule-Spulenkörperfläche
- 155: erste Energieempfangsspule-Außenarmrippe
- 156: zweite Energieempfangsspule-Außenarmrippe
- 157: Energieempfangsspule-Zentralrippe
- 158: erster Energieempfangsspule-Spulenkörperfläche-Abschnitt
- 159: zweiter Energieempfangsspule-Spulenkörperfläche-Abschnitt
- 160: Energiesendespule-Leiterplatte
- 161: erste Energieempfangsspule-Leiterplatte
- 162: zweite Energieempfangsspule-Leiterplatte
- 163: Energiesendespule-Treiber
- 164: Kühlungseinrichtung
- 165: Energiesendespule-Mikrocontroller
- 167: Energiesendespule-Kommunikationsschnittstelle
- 173: Energiesendespule-Strommesser
- 174: Energiesendespule-Schalter
- 180: erster Steuerspannung-Wicklungsabschnitt-Wicklungssektor
- 181: zweiter Steuerspannung-Wicklungsabschnitt-Wicklungssektor
- 182: erster Lastspannung-Wicklungsabschnitt-Wicklungssektor
- 183: zweiter Lastspannung-Wicklungsabschnitt-Wicklungssektor
- 184: Steckverbinder
- 191: erster Gleichrichter
- 192: erster Glättungskondensator
- 193: zweiter Gleichrichter
- 194: zweiter Glättungskondensator
- 195: Lastspannungskreis-Schalter
- 196: Lastspannungskreis-Strommesser
- 197: dritter Glättungskondensator
- 198: vierter Glättungskondensator
- 199: erster Energiespeicher
- 200: zweiter Energiespeicher
- 202: Außenarmrippe
- 204: Zentralrippe

## Patentansprüche

1. Induktive Energieübertragungseinrichtung für ein lineares Transportsystem (101), bei dem wenigstens ein magnetisch angetriebener Schlitten (103) sich entlang einer eine Motormoduleinrichtung aufweisenden Schlittenführung (102) bewegt, wobei die induktive Energieübertragungseinrichtung
eine Energiesendespule (125), die eine Primärwicklung (126) zum Anlegen einer Eingangsspannung aufweist, und
eine Energieempfangsspule (127), die eine Sekundärwicklung (128) zum Abgreifen einer Ausgangsspannung aufweist, umfasst,
wobei die Energiesendespule (125) an der Motormoduleinrichtung angeordnet ist und sich entlang der Schlittenführung (102) erstreckt,
wobei die Energieempfangsspule (127) am Schlitten (103) angeordnet ist und sich entlang des Schlittens (103) erstreckt,
wobei die Energiesendespule (125) und die Energieempfangsspule (127), wenn der wenigstens eine magnetisch angetriebene Schlitten (103) sich entlang der die Motormoduleinrichtung aufweisenden Schlittenführung (102) bewegt, sich mindestens teilweise gegenüberliegen, um Energie von der Energiesendespule (125) auf die Energieempfangsspule (127) zu übertragen,
**dadurch gekennzeichnet, dass**
die Sekundärwicklung (128) der Energieempfangsspule (127) einen Steuerspannung-Wicklungsabschnitt (146) und einen Lastspannung-Wicklungsabschnitt (147) aufweist, wobei der Steuerspannung-Wicklungsabschnitt (146) und der Lastspannung-Wicklungsabschnitt (147) voneinander getrennte Wicklungsleiterbahnen aufweisen,
wobei der Steuerspannung-Wicklungsabschnitt (146) eine Steuerspannung zum Abgriff durch eine Schlittenführung-Steuereinheit (133) auf dem Schlitten (103) bereitstellt und
wobei der Lastspannung-Wicklungsabschnitt (147) eine Lastspannung zum Abgriff durch eine Last (137) auf dem Schlitten (103) bereitstellt.

2. Induktive Energieübertragungseinrichtung nach Anspruch 1,
wobei der Querschnitt der den Steuerspannung-Wicklungsabschnitt (146) bildenden Wicklungsleiterbahn kleiner als der Querschnitt der den Lastspannung-Wicklungsabschnitt (147) bildenden Wicklungsleiterbahn ausgeführt ist.

3. Induktive Energieübertragungseinrichtung nach Anspruch 1 oder 2,
wobei die Windungszahl des Steuerspannung-Wicklungsabschnitts (146) niedriger als die Windungszahl des Lastspannung-Wicklungsabschnitts (147) ist.

4. Induktive Energieübertragungseinrichtung nach einem Ansprüche 1 bis 3,
wobei die Energiesendespule (125) und die Energieempfangsspule (127) jeweils einen Spulenkörper (135) aufweisen,
wobei der Energiesendespule-Spulenkörper (148) der Energiesendespule (125) und der Energieempfangsspule-Spulenkörper (153) der Energieempfangsspule (127) parallel zueinander ausgerichtet sind und sich zumindest teilweise gegenüberliegen, wenn der wenigstens eine magnetisch angetriebene Schlitten (103) sich entlang der die Motormoduleinrichtung aufweisenden Schlittenführung (102) bewegt,
wobei die von der Primärwicklung (126) der Energiesendespule (125) aufgespannte Fläche parallel zum Energiesendespule-Spulenkörper (148) der Energiesendespule (125) ausgerichtet ist, und
wobei die von dem Steuerspannung-Wicklungsabschnitt (146) und dem Lastspannung-Wicklungsabschnitt (147) der Sekundärwicklung (128) der Energieempfangsspule (127) aufgespannten Flächen senkrecht zum Energieempfangsspule-Spulenkörper (153) der Energieempfangsspule (127) ausgerichtet sind.

5. Induktive Energieübertragungseinrichtung nach Anspruch 4,
wobei der Energiesendespule-Spulenkörper (148) der Energiesendespule (125) und der Energieempfangsspule-Spulenkörper (153) der Energieempfangsspule (127) im Querschnitt jeweils E-förmig mit zwei Außenarmrippen (202) und einer Zentralrippe (204) auf einer Spulenkörperfläche (136) ausgebildet sind, wobei die E-förmigen Querschnitte einander zugewandt sind und die Außenarmrippen (202) und die Zentralrippen (204) auf der Spulenkörperfläche (136) sich gegenüberliegen, wenn der wenigstens eine magnetisch angetriebene Schlitten (103) sich entlang der die Motormoduleinrichtung aufweisenden Schlittenführung (102) bewegt, und
wobei die Primärwicklung (126) der Energiesendespule (125) zwischen dem ersten Energiesendespule-Außenarmrippe (150) und dem zweiten energiesendespule-Außenarmrippe (151) der Energiesendespuel-Spulenkörper (148) um die Energiesendespule-Zentralrippe (152) herum angeordnet ist und wobei der Steuerspannung-Wicklungsabschnitt (146) und der Lastspannung-Wicklungsabschnitt (147) der Sekundärwicklung (128) der Energieempfangsspule (127) zwischen dem ersten Energieempfangsspule-Außenarmrippe (155) und dem zweiten Energieempfangsspule-Außenarmrippe (156) der Energieempfangsspule-Spulenkörper (153) um die Energieempfangsspule-Spulenkörperfläche (154) herum angeordnet sind.

6. Induktive Energieübertragungseinrichtung nach Anspruch 4 oder 5,
wobei der Energieempfangsspule-Spulenkörper (153) der Energieempfangsspule (127) einen ersten Energieempfangsspule-Spulenkörperfläche-Abschnitt (158) und einen zweiten Energieempfangsspule-Spulenkörperfläche-Abschnitt (159) aufweist, und
wobei der Lastspannung-Wicklungsabschnitt (147) im ersten Energieempfangsspule-Spulenkörperfläche-Abschnitt (158) und der Steuerspannung-Wicklungsabschnitt (146) im zweiten Energieempfangsspule-Spulenkörperfläche-Abschnitt (159) ausgeführt ist.

7. Induktive Energieübertragungseinrichtung nach Anspruch 4 oder 5, wobei der Steuerspannung-Wicklungsabschnitt (146) und der Lastspannung-Wicklungsabschnitt (147) der Energieempfangsspule (127) verschachtelt ausgeführt sind.

8. Induktive Energieübertragungseinrichtung nach einem der Ansprüche 4 bis 7,
wobei die Energieempfangsspule (127) eine erste Energieempfangsspule-Leiterplatte (161), die erste Wicklungsleiterbahnen aufweist, eine zweite Energieempfangsspule-Leiterplatte (162), die zweite Wicklungsleiterbahnen aufweist, und den Energiesendespule-Spulenkörper (148), der zwischen der ersten Energieempfangsspule-Leiterplatte (161) und der zweiten Energieempfangsspule-Leiterplatte (162) angeordnet ist, umfasst, und
wobei die ersten Wicklungsleiterbahnen der ersten Energieempfangsspule-Leiterplatte (161) und die zweiten Wicklungsleiterbahnen der zweiten Energieempfangsspule-Leiterplatte (162) über elektrische Steckverbinder (184) miteinander verbunden sind, um den Steuerspannung-Wicklungsabschnitt (146) und den Lastspannung-Wicklungsabschnitt (147) der Sekundärwicklung (128) der Energieempfangsspule (127) auszubilden.

9. Induktive Energieübertragungseinrichtung nach einem der Ansprüche 4 bis 8, wobei auf der dem Energiesendespule-Spulenkörper (148) der Energiesendespule (125) abgewandten Seite des Energieempfangsspule-Spulenkörpers (153) der Energieempfangsspule (127) eine Kühlungseinrichtung (164) für den Steuerspannung-Wicklungsabschnitt (146) und den Lastspannung-Wicklungsabschnitt (147) der Sekundärwicklung (128) der Energieempfangsspule (127) vorgesehen ist.

10. Magnetisch angetriebener Schlitten (103) für ein lineares Transportsystem (101), bei dem der magnetisch angetriebene Schlitten (103) sich entlang einer eine Motormoduleinrichtung aufweisenden Schlittenführung (102) bewegt, mit einer induktiven Energieübertragungseinrichtung nach einem der Ansprüche 1 bis 9,
wobei der Steuerspannung-Wicklungsabschnitt (146) der Sekundärwicklung (128) der Energieempfangsspule (127) über einen ersten Gleichrichter (191) mit einer Schlittenführung-Steuereinheit (133) verbunden ist, und
wobei der Lastspannung-Wicklungsabschnitt (147) der Sekundärwicklung (128) der Energieempfangsspule (127) über einen zweiten Gleichrichter (193) mit einer Last (137) verbunden ist.

11. Magnetisch angetriebener Schlitten (103) nach Anspruch 10, wobei zwischen dem Lastspannung-Wicklungsabschnitt (147) der Sekundärwicklung (128) der Energieempfangsspule (127) und der Last (137) ein Lastspannungskreis-Schalter (195) vorgesehen ist, der mit der Schlittenführung-Steuereinheit (133) verbunden ist, wobei die Schlittenführung-Steuereinheit (133) den Lastspannungskreis-Schalter (195) öffnen kann, um die Last (137) von dem Lastspannung-Wicklungsabschnitt (147) abzutrennen.

12. Magnetisch angetriebener Schlitten (103) nach Anspruch 10 oder 11, wobei an den Steuerspannung-Wicklungsabschnitt (146) ein erster Energiespeicher (199) und an den Lastspannung-Wicklungsabschnitt (147) ein zweiter Energiespeicher (200) angeschlossen ist, wobei der erste Energiespeicher (199) und der zweite Energiespeicher (200) ausgelegt sind, die zwischengespeicherte elektrische Energie an die Schlittenführung-Steuereinheit (133) und/oder die Last (137) abzugeben.

13. Lineares Transportsystem (101) mit wenigstens einem magnetisch angetriebenen Schlitten (103) nach einem der Ansprüche 10 bis 12 und einer eine Motormoduleinrichtung aufweisenden Schlittenführung (102), wobei der wenigstens eine magnetisch angetriebene Schlitten (103) sich entlang der Schlittenführung (102) bewegt, wobei die Motormoduleinrichtung eine Mehrzahl von Energiesendespulen (125) umfasst und eingerichtet ist, um auf der Grundlage einer Steuerinformation wenigstens eine Energiesendespule (125) auszuwählen und einen Energieübertrag von der Energiesendespule (125) auf die Energieempfangsspule (127) am Schlitten (103) einzustellen.

## Claims

1. An inductive energy-transmitting device for a linear transport system (101), in which at least one magnetically driven carriage (103) moves along a carriage guide (102) comprising a motor module device,
wherein the inductive energy-transmitting device comprises an energy-transmitting coil (125) having a primary winding (126) for applying an input voltage, and an energy-receiving coil (127) having a secondary winding (128) for tapping an output voltage,
wherein the energy-transmitting coil (125) is arranged on the motor module device and extends along the carriage guide (102),
wherein the energy-receiving coil (127) is arranged at the carriage (103) and extends along the carriage (103),
wherein the energy-transmitting coil (125) and the energy-receiving coil (127), when the at least one magnetically driven carriage (103) moves along the carriage guide (102) comprising the motor module device, at least partially oppose each other to transfer energy from the energy-transmitting coil (125) to the energy-receiving coil (127),
**characterized in that**
the secondary winding (128) of the energy-receiving coil (127) comprises a control-voltage-winding portion (146) and a load-voltage-winding portion (147), the control-voltage-winding portion (146) and the load-voltage-winding portion (147) having separate winding conductor tracks from each other,
wherein the control-voltage-winding portion (146) provides a control voltage for tapping by a carriage guide controller (133) on the carriage (103), and
wherein the load-voltage-winding portion (147) provides a load voltage for tapping by a load (137) on the carriage (103).

2. The inductive energy-transmitting device according to claim 1,
wherein the cross-section of the winding conductor track forming the control-voltage-winding portion (146) is embodied to be smaller than the cross-section of the winding conductor track forming the load-voltage-winding portion (147).

3. The inductive energy-transmitting device according to claim 1 or 2,
wherein the number of windings of the control-voltage-winding portion (146) is lower than the number of windings of the load-voltage-winding portion (147).

4. The inductive energy-transmitting device according to any one of claims 1 to 3,
wherein the energy-transmitting coil (125) and the energy-receiving coil (127) each comprise a coil body (135),
wherein the energy-transmitting coil body (148) of the energy-transmitting coil (125) and the energy-receiving coil body (153) of the energy-receiving coil (127) are aligned in parallel with regard to each other and at least partially face each other when the at least one magnetically driven carriage (103) moves along the carriage guide (102) comprising the motor module device,
wherein the area spanned by the primary winding (126) of the energy-transmitting coil (125) is oriented in parallel to the energy-transmitting coil body (148) of the energy-transmitting coil (125), and
wherein the surfaces spanned by the control-voltage-winding portion (146) and the load-voltage-winding portion (147) of the secondary winding (128) of the energy-receiving coil (127) are oriented perpendicularly with regard to the energy-receiving coil body (153) of the energy-receiving coil (127).

5. The inductive energy-transmitting device of claim 4,
wherein the energy-transmitting coil body (148) of the energy-transmitting coil (125) and the energy-receiving coil body (153) of the energy-receiving coil (127) are each E-shaped in cross-section with two outer arm ribs (202) and a center rib (204) on a coil body surface (136), wherein the E-shaped cross-sections face each other and the outer arm ribs (202) and the central ribs (204) on the coil body surface (136) face each other when the at least one magnetically driven carriage (103) moves along the carriage guide (102) comprising the motor module device, and
wherein the primary winding (126) of the energy-transmitting coil (125) is arranged between the first energy-transmitting coil outer arm rib (150) and the second energy-transmitting coil outer arm rib (151) of the energy-transmitting coil body (148) around the energy-transmitting coil central rib (152), and wherein the control-voltage-winding portion (146) and the load-voltage-winding portion (147) of the secondary winding (128) of the energy-receiving coil (127) are arranged between the first energy-receiving coil outer arm rib (155) and the second energy-receiving coil outer arm rib (156) of the energy-receiving coil body (153) around the energy-receiving coil body area (154).

6. The inductive energy-transmitting device according to claim 4 or 5,
wherein the energy-receiving coil body (153) of the energy-receiving coil (127) comprises a first energy-receiving coil body area portion (158) and a second energy-receiving coil body area portion (159), and
wherein the load-voltage-winding portion (147) is embodied in the first energy-receiving coil body area portion (158) and the control-voltage-winding portion (146) is embodied in the second energy-receiving coil body area portion (159).

7. The inductive energy-transmitting device according to claim 4 or 5, wherein the control-voltage-winding portion (146) and the load-voltage-winding portion (147) of the energy-receiving coil (127) are nested.

8. The inductive energy-transmitting device according to any one of claims 4 to 7,
wherein the energy-receiving coil (127) includes a first energy-receiving coil circuit board (161) comprising first winding conductor tracks, a second energy-receiving coil circuit board (162) comprising second winding conductor tracks, and the energy-transmitting coil body (148) arranged between said first energy-receiving coil circuit board (161) and said second energy-receiving coil circuit board (162), and
wherein the first winding conductor tracks of the first energy-receiving coil circuit board (161) and the second winding conductor tracks of the second energy-receiving coil circuit board (162) are connected via electrical connectors (184) to embody the control-voltage-winding portion (146) and the load-voltage-winding portion (147) of the secondary winding (128) of the energy-receiving coil (127).

9. The inductive energy-transmitting device according to any one of claims 4 to 8, wherein a cooling device (164) for the control-voltage-winding portion (146) and the load-voltage-winding portion (147) of the secondary winding (128) of the energy-receiving coil (127) is provided on the side of the energy-receiving coil body (153) of the energy-receiving coil (127) facing away from the energy-transmitting coil body (148) of the energy-transmitting coil (125).

10. A magnetically driven carriage (103) for a linear transport system (101), in which the magnetically driven carriage (103) moves along a carriage guide (102) having a motor module device, comprising an inductive energy-transmitting device according to any one of claims 1 to 9,
wherein the control-voltage-winding portion (146) of the secondary winding (128) of the energy-receiving coil (127) is connected to a carriage guide controller (133) via a first rectifier (191), and
wherein the load-voltage-winding portion (147) of the secondary winding (128) of the energy-receiving coil (127) is connected to a load (137) via a second rectifier (193).

11. The magnetically driven carriage (103) according to claim 10, wherein a load voltage circuit switch (195) is provided between the load-voltage-winding portion (147) of the secondary winding (128) of the energy-receiving coil (127) and the load (137), the load voltage circuit switch (195) being connected to the carriage guide controller (133), wherein the carriage guide controller (133) may open the load voltage circuit switch (195) to disconnect the load (137) from the load-voltage-winding portion (147).

12. The magnetically driven carriage (103) according to claim 10 or 11, wherein a first energy storage (199) is connected to the control-voltage-winding portion (146) and a second energy storage (200) is connected to the load-voltage-winding portion (147), wherein the first energy storage (199) and the second energy storage (200) are set up to output the temporarily stored electrical energy to the carriage guide controller (133) and/or the load (137).

13. A linear transport system (101) comprising at least one magnetically driven carriage (103) according to any one of claims 10 to 12 and a carriage guide (102) comprising a motor module device, wherein the at least one magnetically driven carriage (103) moves along the carriage guide (102), wherein the motor module device comprises a plurality of energy-transmitting coils (125) and is arranged to select at least one energy-transmitting coil (125) on the basis of control information and to adjust an energy transmission from the energy-transmitting coil (125) to the energy-receiving coil (127) on the carriage (103).

## Revendications

1. Dispositif de transmission d'énergie par induction destiné à un système de transport linéaire (101), dispositif dans lequel au moins un chariot à entraînement magnétique (103) se déplace le long d'un guide de chariot (102) comportant un dispositif de module moteur,
le dispositif de transmission d'énergie par induction comportant une bobine d'émission d'énergie (125) qui comporte un enroulement primaire (126) destiné à appliquer une tension d'entrée, et une bobine de réception d'énergie (127) qui comporte un enroulement secondaire (128) destiné à prélever une tension de sortie,
la bobine d'émission d'énergie (125) étant disposée sur le dispositif de module moteur et s'étendant le long du guide de chariot (102),
la bobine de réception d'énergie (127) étant disposée sur le chariot (103) et s'étendant le long du chariot (103),
la bobine d'émission d'énergie (125) et la bobine de réception d'énergie (127), lorsque l'au moins un chariot à entraînement magnétique (103) se déplace le long du guide de chariot (102) comportant le dispositif de module moteur, étant au moins partiellement opposées l'une à l'autre afin de transmettre de l'énergie de la bobine d'émission d'énergie (125) à la bobine de réception d'énergie (127),
**caractérisé en ce que**
l'enroulement secondaire (128) de la bobine de réception d'énergie (127) comporte une portion d'enroulement de tension de commande (146) et une portion d'enroulement de tension de charge (147), la portion d'enroulement de tension de commande (146) et la portion d'enroulement de tension de charge (147) comportant des pistes conductrices d'enroulement séparées les unes des autres,
la portion d'enroulement de tension de commande (146) fournissant une tension de commande destinée à être prélevée par une unité de commande de guide de chariot (133) située sur le chariot (103) et
la portion d'enroulement de tension de charge (147) fournissant une tension de charge destinée à être prélevée par une charge (137) située sur le chariot (103) .

2. Dispositif de transmission d'énergie par induction selon la revendication 1,
la section transversale de la piste conductrice d'enroulement formant la portion d'enroulement de tension de commande (146) étant inférieure à la section transversale de la piste conductrice d'enroulement formant la portion d'enroulement de tension de charge (147) .

3. Dispositif de transmission d'énergie par induction selon la revendication 1 ou 2, le nombre d'enroulements de la portion d'enroulement de tension de commande (146) étant inférieur au nombre d'enroulements de la portion d'enroulement de tension de charge (147).

4. Dispositif de transmission d'énergie par induction selon l'une des revendications 1 à 3,
la bobine d'émission d'énergie (125) et la bobine de réception d'énergie (127) comportant chacune un corps de bobine (135),
le corps de bobine d'émission d'énergie (148) de la bobine d'émission d'énergie (125) et le corps de bobine de réception d'énergie (153) de la bobine de réception d'énergie (127) étant orientés parallèlement l'un à l'autre et étant au moins partiellement opposés l'un à l'autre lorsque l'au moins un chariot à entraînement magnétique (103) se déplace le long du guide de chariot (102) comportant le dispositif de module moteur,
la surface couverte par l'enroulement primaire (126) de la bobine d'émission d'énergie (125) étant orientée parallèlement au corps de bobine d'émission d'énergie (148) de la bobine d'émission d'énergie (125), et
les surfaces couvertes par la portion d'enroulement de tension de commande (146) et la portion d'enroulement de tension de charge (147) de l'enroulement secondaire (128) de la bobine de réception d'énergie (127) étant orientées perpendiculairement au corps de bobine de réception d'énergie (153) de la bobine de réception d'énergie (127).

5. Dispositif de transmission d'énergie par induction selon la revendication 4,
le corps de bobine d'émission d'énergie (148) de la bobine d'émission d'énergie (125) et le corps de bobine de réception d'énergie (153) de la bobine de réception d'énergie (127) ayant chacun une forme de E en coupe transversale pourvue de deux nervures formant bras extérieures (202) et une nervure centrale (204) sur une surface de corps de bobine (136), les sections transversales en forme de E étant dirigées l'une vers l'autre et les nervures formant bras extérieures (202) et les nervures centrales (204) sur la surface de corps de bobine (136) étant opposées lorsque l'au moins un chariot à entraînement magnétique (103) se déplace le long du guide de chariot (102) comportant le dispositif de module moteur, et
l'enroulement primaire (126) de la bobine d'émission d'énergie (125) étant disposé autour de la nervure centrale de bobine d'émission d'énergie (152) entre la première nervure formant bras extérieure de bobine d'émission d'énergie (150) et la deuxième nervure formant bras extérieure de bobine d'émission d'énergie (151) du corps de bobine d'émission d'énergie (148) et la portion d'enroulement de tension de commande (146) et la portion d'enroulement de tension de charge (147) de l'enroulement secondaire (128) de la bobine de réception d'énergie (127) étant disposées autour de la surface de corps de bobine de réception d'énergie (154) entre la première nervure formant bras extérieure de bobine de réception d'énergie (155) et la deuxième nervure formant bras extérieure de bobine de réception d'énergie (156) du corps de bobine de réception d'énergie (153).

6. Dispositif de transmission d'énergie par induction selon la revendication 4 ou 5,
le corps de bobine de réception d'énergie (153) de la bobine de réception d'énergie (127) comportant une première portion de surface de corps de bobine de réception d'énergie (158) et une deuxième portion de surface de corps de bobine de réception d'énergie (159), et
la portion d'enroulement de tension de charge (147) étant réalisée dans la première portion de surface de corps de bobine de réception d'énergie (158) et la portion d'enroulement de tension de commande (146) étant réalisée dans la deuxième portion de surface de corps de bobine de réception d'énergie (159).

7. Dispositif de transmission d'énergie par induction selon la revendication 4 ou 5, la portion d'enroulement de tension de commande (146) et la portion d'enroulement de tension de charge (147) de la bobine de réception d'énergie (127) étant conçues pour être emboîtées.

8. Dispositif de transmission d'énergie par induction selon l'une des revendications 4 à 7,
la bobine de réception d'énergie (127) comportant une première carte de circuit imprimé de bobine de réception d'énergie (161) pourvue de premières pistes conductrices d'enroulement, une deuxième carte de circuit imprimé de bobine de réception d'énergie (162) pourvue de deuxièmes pistes conductrices d'enroulement, et le corps de bobine d'émission d'énergie (148) disposé entre la première carte de circuit imprimé de bobine de réception d'énergie (161) et la deuxième carte de circuit imprimé de bobine de réception d'énergie (162), et
les premières pistes conductrices d'enroulement de la première carte de circuit imprimé de bobine de réception d'énergie (161) et les deuxièmes pistes conductrices d'enroulement de la deuxième carte de circuit imprimé de bobine de réception d'énergie (162) étant reliées entre elles par le biais de connecteurs électriques enfichables (184) afin de former la portion d'enroulement de tension de commande (146) et la portion d'enroulement de tension de charge (147) de l'enroulement secondaire (128) de la bobine de réception d'énergie (127).

9. Dispositif de transmission d'énergie par induction selon l'une des revendications 4 à 8,
un dispositif de refroidissement (164), destiné à la portion d'enroulement de tension de commande (146) et à la portion d'enroulement de tension de charge (147) de l'enroulement secondaire (128) de la bobine de réception d'énergie (127), étant prévu du côté du corps de bobine de réception d'énergie (153) de la bobine de réception d'énergie (127) qui est opposé au corps de bobine d'émission d'énergie (148) de la bobine d'émission d'énergie (125).

10. Chariot à entraînement magnétique (103) destiné à un système de transport linéaire (101) dans lequel le chariot à entraînement magnétique (103) se déplace le long d'un guide de chariot (102) comportant un dispositif de module moteur, ledit chariot comprenant un dispositif de transmission d'énergie par induction selon l'une des revendications 1 à 9,
la portion d'enroulement de tension de commande (146) de l'enroulement secondaire (128) de la bobine de réception d'énergie (127) étant reliée à une unité de commande de guide de chariot (133) par le biais d'un premier redresseur (191), et
la portion d'enroulement de tension de charge (147) de l'enroulement secondaire (128) de la bobine de réception d'énergie (127) étant reliée à une charge (137) par le biais d'un deuxième redresseur (193).

11. Chariot à entraînement magnétique (103) selon la revendication 10,
un commutateur de circuit de tension de charge (195), qui est relié à l'unité de commande de guide de chariot (133), étant prévu entre la portion d'enroulement de tension de charge (147) de l'enroulement secondaire (128) de la bobine de réception d'énergie (127) et la charge (137), l'unité de commande de guide de chariot (133) pouvant ouvrir le commutateur de circuit de tension de charge (195) afin de déconnecter la charge (137) de la portion d'enroulement de tension de charge (147) .

12. Chariot à entraînement magnétique (103) selon la revendication 10 ou 11, un premier accumulateur d'énergie (199) étant raccordé à la portion d'enroulement de tension de commande (146) et un deuxième accumulateur d'énergie (200) étant raccordé à la portion d'enroulement de tension de charge (147), le premier accumulateur d'énergie (199) et le deuxième accumulateur d'énergie (200) étant conçus pour fournir de l'énergie électrique stockée temporairement à l'unité de commande de guide de chariot (133) et/ou à la charge (137).

13. Système de transport linéaire (101) comprenant au moins un chariot à entraînement magnétique (103) selon l'une des revendications 10 à 12 et un guide de chariot (102) comportant un dispositif de module moteur, l'au moins un chariot à entraînement magnétique (103) se déplaçant le long du guide de chariot (102), le dispositif de module moteur comprenant une pluralité de bobines d'émission d'énergie (125) et étant conçu pour sélectionner au moins une bobine d'émission d'énergie (125) sur la base d'une information de commande et pour régler un transfert d'énergie de la bobine d'émission d'énergie (125) à la bobine de réception d'énergie (127) sur le chariot (103).
